(19) Europäisches Patentamt
European Patent Office
Office européen des brevets

(11) **EP 2 510 478 B1**

(12) **EUROPÄISCHE PATENTSCHRIFT**

(45) Veröffentlichungstag und Bekanntmachung des Hinweises auf die Patenterteilung:
**06.04.2016 Patentblatt 2016/14**

(21) Anmeldenummer: **10776308.8**

(22) Anmeldetag: **25.10.2010**

(51) Int Cl.:
***G06K 9/62*** *(2006.01)*

(86) Internationale Anmeldenummer:
**PCT/EP2010/006510**

(87) Internationale Veröffentlichungsnummer:
**WO 2011/069580 (16.06.2011 Gazette 2011/24)**

(54) **VERFAHREN ZUR ERMITTLUNG GEMEINSAMER URSACHEN VON STREUUNGEN VON SIMULATIONS- UND/ODER MESSERGEBNISSEN**

METHOD FOR DETERMINING JOINT CAUSES OF SCATTER OF SIMULATION RESULTS AND/OR MEASUREMENT RESULTS

PROCÉDÉ SERVANT À DÉTERMINER DES CAUSES COMMUNES À DES DISPERSIONS DE RÉSULTATS DE SIMULATION ET/OU DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2009 DE 102009057295**

(43) Veröffentlichungstag der Anmeldung:
**17.10.2012 Patentblatt 2012/42**

(73) Patentinhaber: **Fraunhofer-Gesellschaft zur Förderung der angewandten Forschung e.V.
80686 München (DE)**

(72) Erfinder:
  • **THOLE, Clemens-August
    53229 Bonn (DE)**
  • **MIERENDORFF, Hermann
    53757 Sankt Augustin (DE)**

(74) Vertreter: **Pfenning, Meinig & Partner mbB
Patent- und Rechtsanwälte
Theresienhöhe 11a
80339 München (DE)**

(56) Entgegenhaltungen:
  • BLYTH ET AL: "A comparative study of the boundary and finite element methods for the Helmholtz equation in two dimensions", ENGINEERING ANALYSIS WITH BOUNDARY ELEMENTS, ELSEVIER, Bd. 31, Nr. 1, 13. Dezember 2006 (2006-12-13), Seiten 35-49, XP005802341, ISSN: 0955-7997, DOI: 10.1016/J.ENGANABOUND.2006.07.005
  • J WOLF: "Stress finite-element models with independent strains", INTERNATIONAL JOURNAL OF SOLIDS AND STRUCTURES, Bd. 11, Nr. 5, 1. Mai 1975 (1975-05-01), Seiten 555-568, XP55012183, ISSN: 0020-7683, DOI: 10.1016/0020-7683(75)90029-3
  • MEI ET AL: "Data analysis for parallel car-crash simulation results and model optimization", SIMULATION MODELLING PRACTICE AND THEORY, ELSEVIER, Bd. 16, Nr. 3, 15. Dezember 2007 (2007-12-15), Seiten 329-337, XP022503532, ISSN: 1569-190X, DOI: 10.1016/J.SIMPAT.2007.11.018
  • Clemens-August Thole ET AL: "Advanced Mode Analysis for Crash Simulation Results", LS-DYNA Forum, Bamberg, 1. Januar 2010 (2010-01-01), XP55012950, Gefunden im Internet: URL:http://vg00.met.vgwort.de/na/e2987ed95 fa84d1e82ad3f6a5035d9a4?l=http://publica.f raunhofer.de/eprints/urn:nbn:de:0011-n-143 6501.pdf [gefunden am 2011-11-23]

EP 2 510 478 B1

- **WILLEM ROUX ET AL: "Stochastic analysis of highly non-linear structures", INTERNATIONAL JOURNAL FOR NUMERICAL METHODS IN ENGINEERING, Bd. 65, Nr. 8, 19. Februar 2006 (2006-02-19), Seiten 1221-1242, XP55011184, ISSN: 0029-5981, DOI: 10.1002/nme.1485**
- **MICHAEL BEER ET AL: "Detection of branching points in noisy processes", COMPUTATIONAL MECHANICS ; SOLIDS, FLUIDS, ENGINEERED MATERIALS, AGING INFRASTRUCTURE, MOLECULAR DYNAMICS, HEAT TRANSFER, MANUFACTURING PROCESSES, OPTIMIZATION, FRACTURE & INTEGRITY, SPRINGER, BERLIN, DE, Bd. 45, Nr. 4, 18. Dezember 2009 (2009-12-18), Seiten 363-374, XP019782192, ISSN: 1432-0924**

- **Blankertz ET AL: "Invariant Common Spatial Patterns: Alleviating Nonstationarities in Brain-Computer Interfacing", Advances in Neural Information Processing Systems Volume 20, 1. Januar 2008 (2008-01-01), XP55013036, Gefunden im Internet: URL:http://books.nips.cc/papers/files/nips 20/NIPS2007_0983.pdf [gefunden am 2011-11-24]**

**Beschreibung**

Die Erfindung betrifft ein Verfahren zur Ermittlung gemeinsamer Ursachen von Streuungen von Simulations- und/oder Messergebnissen, ein Verfahren zur Bestimmung von Ursachen von Streuungen von Mess- und/oder Simulationsergebnissen sowie ein Verfahren zur Bestimmung von Ausbreitungswegen von Streuungen von Messergebnissen oder Simulationsergebnissen. Das Verfahren soll Difference Principle Component Analysis (DPCA) genannt werden.

Crashvorgänge von Kraftfahrzeugen zeigen instabiles Verhalten. Wird ein bestimmtes Fahrzeugmodell mehrfach getestet, ergeben sich unter Umständen in den einzelnen Tests substantiell unterschiedliche Ergebnisse. Dies kann z.B. daran liegen, dass bestimmte Teile unter geringfügig unterschiedlichen Startbedingungen eine völlig andere Verformung zeigen. Wird beispielsweise ein Stab in seiner Längsrichtung belastet, so hängt es von minimalen Unterschieden in den Startbedingungen ab, in welche Richtung er ausknickt. Ähnlich beult sich eine Fläche, die mit einer parallel zur Ebene der Fläche gerichteten Kraft belastet wird nach oben oder unten aus, wobei die Entscheidung von kleinen Unterschieden in den Anfangsbedingungen abhängt.

Weist beispielsweise ein Kraftfahrzeug an für das Crash-Verhalten wichtigen Stellen ein derart unbestimmtes Beulverhalten auf, können bereits minimale Veränderungen am Modell zu einem substantiell anderen Ausgang des Crash-Testes führen. Dadurch ist das Crash-Verhalten nicht mehr durch gezielte Auslegung des Modells kontrollierbar. Vielmehr können Tests unter gleichen Anfangsbedingungen zu substantiell unterschiedlichen Ergebnissen kommen.

Ähnliche Probleme treten auch in ganz anderen Gebieten auf, wie zum Beispiel bei Umform-, Gieß- und anderen Produktionsprozessen sowie bei Strömungen. So kann beispielsweise ein Wirbel abhängig von minimalen Änderungen der Umgebung nach einer Ablösung beim Auftreffen auf ein Hindernis substantiell unterschiedliche Wege nehmen.

Das genannte Problem besteht sowohl bei in der Realität tatsächlich durchgeführten Experimenten als auch bei numerischen Simulationen. Die vorliegende Erfindung ist auf tatsächliche Experimente und Simulationen gleichermaßen anwendbar.

Für die Entwicklung von Modellen ist es wichtig, derartige Instabilitäten zu kennen um das Modell oder den Prozess so anpassen zu können, dass sie möglichst nicht auftreten, dass also das Modell auch bei Änderungen der Rand- bzw. Anfangsbedingungen im Wesentlichen das gleiche Verhalten im Experiment oder der Simulation zeigt.

Bei einem realen Crash-Modell eines Automobils wurde einmal festgestellt, dass es in einem Fahrzeug etwa 40 Quellen von Instabilitäten gibt, von denen sich zwei auf die Eindringtiefe der Stirnwand in die Fahrgastzelle auswirken. Die Eindringtiefe der Stirnwand in die Fahrgastzelle ist ein wichtiges Auslegungskriterium für das Crash-Verhalten eines Autos. Um das Crash-Verhalten verbessern zu können, müssen die Stellen für die relevanten Ursachen der Streuungen daher möglichst genau identifiziert werden können.

Im Stand der Technik existieren verschiedene Verfahren um Streuungen von Ergebnissen untersuchen zu können.

Die DE 102 07 503 B3 beschreibt die Analyse einer Streuung von Crash-Ergebnissen mittels eines Ähnlichkeitsfunktionals für das Muster der Streuung. Mit Hilfe dieses Ansatzes ist es allerdings im . Normalfall nicht möglich, verschiedene Ursachen einer Streuung voneinander zu trennen.

Die US 7,386,425 untersucht, ob sich eine Veränderung von Ergebnissen der Crash-Simulation mit Hilfe von Parameteränderungen erklären lässt, oder ob diese eine andere Ursache hat.

In der Veröffentlichung "Principal Component Analysis for Detection of Globally Important Input Parameter in Nonlinear Finite Element Analysis" von Ackermann et al., in Weimar, Optimization and Stochastic Days 5.0, November 20-21, 2008 wird die sogenannte "Principle Component Analysis" (PCA) für die Analyse von wichtigen Inputparametern und deren Auswirkungen auf Crash-Ergebnisse eingeführt. Dabei wird die PCA nicht nur auf Kennwerte sondern auch auf komplette Simulationsergebnisse (z.B. alle Verschiebungen) oder substantielle Teilmengen angewandt.

Keiner der genannten Ansätze ist jedoch in der Lage, Anteile an einer Streuung zu unterscheiden, die auf unterschiedliche Ursachen zurückzuführen sind.

Aufgabe der vorliegenden Erfindung ist es daher, ein Verfahren anzugeben, mit dem sich gemeinsame und unterschiedliche Ursachen von Streuungen an unterschiedlichen Orten und/oder zu unterschiedlichen Zeiten ermitteln lassen. Aufgabe ist es außerdem, ein Verfahren anzugeben, mit dem sich Ursachen von Streuungen in verschiedenen Teilmengen der Ergebnisse einer Simulation (unterschiedliche Orte und/oder Zeiten) bestimmen lassen. Aufgabe der Erfindung ist es außerdem, ein Verfahren anzugeben, mit dem sich Ausbreitungswege von Streuungen in Mess- und/oder Simulationsergebnissen bestimmen lassen. Aufgabe ist es ferner, die Anteile der Streuung in einer Teilmenge der Knoten zu bestimmten Zeitpunkten, die von verschiedenen Ursachen herrühren, zu bestimmen. Erfindungsgemäß wird ein Verfahren zur Ermittlung gemeinsamer Ursachen von Streuungen von Werten zumindest einer Beobachtungsgröße in verschiedenen Teilmengen von Punkten eines Objektes angeben.

Die Ursache für eine Streuung liegt im Allgemeinen in den geometrischen Verhältnissen und den Materialeigenschaften, die an einem bestimmten Ort in dem zu untersuchenden Objekt vorliegen. An einer solchen Stelle tritt normalerweise eine Streuung sehr frühzeitig auf und breitet sich von dort aus. In diesem Fall liegt die Ursache der Streuung in den instabilen Verhältnissen oder den Veränderungen an dieser Stelle und eine frühzeitig in Erscheinung tretende Streuung ist die Folge. Eine solche Streuung kann später selber zur Ursache weiterer Streuungen werden oder an anderer Stelle substantiell verstärkt werden.

Neben dem oben beschriebenen Beulverhalten, dass zu Streuungen ohne Änderungen in Modell oder Prozess führt, können Streuungen u.a. dadurch bedingt sein, dàss Randbedingungen nicht exakt kontrollierbar sind oder dass Randbedingungen der Messung bzw. Simulation absichtlich verändert werden um die Stabilität eines Modells zu überprüfen oder die Auswirkungen von Modellvariationen zu testen.

Bevorzugt wird im Rahmen der Erfindung als Ursache die zeitlich früheste Streuung angesehen, die zu jener Streuung führt, deren Ursache gesucht wird.

Werte im Sinne der Erfindung können Ergebnisse von Messungen und/oder Simulationsergebnissen sein. Das erfindungsgemäße Verfahren ist unter anderem einsetzbar für Untersuchungen an realen Objekten wie auch Computersimulationen dieser Vorgänge in den folgenden Bereichen

- Strukturmechanik

  o Crash-Untersuchungen (insbesondere bei Automobilen, Flugzeugen und anderen Fahrzeugen)
  o Formungsvorgänge, Gießvorgänge incl. Erstarrung und andere Produktionsprozesse.
  ∘ Studien über die Auswirkungen von Belastungen mechanischer Strukturen

- Strömungsmechanik

  o Untersuchungen über die Ursachen für instabiles Strömungsverhalten
  o Simulation von Verbrennungsvorgängen
  o Verhalten von Öl- und Gaslagerstätten und deren Ausbeutung.
  o Wettersimulation

- Halbleiter

  ∘ Produktion von Halbleitern

- Akustik

  o Akustisches Verhalten technischer Systeme

Erfindungsgemäß wird von einer Mehrzahl oder Vielzahl von Messungen und/oder Simulationen ausgegangen, deren Werte zumindest bereichsweise in Raum- und/oder Zeitbereichen Streuungen aufweisen. Eine Streuung liegt dabei an einem Raum-Zeit-Punkt vor, wenn die Mess- und/oder Simulationsergebnisse an diesem Punkt, die aus unterschiedlichen Experimenten bzw. Simulationen stammen, unterschiedliche Werte haben, die sich um mehr als einen vorbestimmten Schwellenwert unterscheiden.

Insbesondere bei Messungen können die Streuungen dadurch angeregt sein, dass die Rand- oder Ausgangsbedingungen der Messungen nicht exakt kontrollierbar sind. Es ist aber auch möglich, die Messungen mit Modellen oder Messobjekten durchzuführen, denen von vornherein unterschiedliche Entwürfe zugrundegelegt wurden. Resultieren die Ergebnisse aus Simulationen können die Streuungen z.B. aus Rundungsfehlern der verschiedenen Simulationen resultieren; es werden hier aber bevorzugt die verschiedenen Messungen mit leicht unterschiedlichen Sätzen von Entwürfsparametern durchgeführt. Dabei können die Entwurfsparameter z.B. in den Grenzen variiert werden, die sich durch Schwankungen im Produktionsprozess ergeben. Streuungen treten hier vor allem dadurch auf, dass sich kleine Unterschiede in den Randbedingungen oder Anfangsbedingungen im Laufe des Experimentes oder der Simulation vergrößern. Auch eine Variation der Randbedingungen über mehrere Experimente und/oder Simulationen ist möglich. Auf diese Weise können Streuungen der Messergebnisse untersucht werden, wenn die äußeren Bedingungen des Experiments bzw. der Simulation variieren und die Korrelation zwischen den wesentlichen Trends in den Messergebnissen und den Veränderungen des Modells oder der äußeren Parameter untersucht werden.

Erfindungsgemäß werden nun zunächst Teilmengen der Punkte des Objektes bzw. Modells bestimmt, in denen die Streuungen im Wesentlichen durch die gleichen Ursachen bestimmt werden. Die Teilmengen sind vorzugsweise disjunkt. Teilmengen sind dabei vorzugsweise Teile des Raums aus (Mess-) Punkten des Modells (der Strömung, des Druckfelder, ...) zu verschiedenen Zeitpunkten. Diese Teilmengen werden dabei vorzugsweise so gewählt, dass alle Elemente das gleiche oder sehr ähnliches Streuverhalten zeigen. Dies lässt sich z.B. mit Hilfe von Korrelationsanalysen, wie sie in DE 102 07 503 B3 patentiert worden sind, durchführen.

Die Streuung in einer dieser Teilmengen kann dabei durch eine oder mehrere Ursachen bedingt sein. Es kommt in diesem Schritt nicht darauf an, zu ermitteln, welche Ursachen zu der Streuung in der entsprechenden Teilmenge führt, sondern nur darauf, dass die Streuungen in einer Auswahl der Teilmengen ganz oder 'teilweise durch die gleichen, in diesem Schritt noch unbekannten, Ursachen bedingt sind (und damit alle Punkte ein ähnliches Streuverhalten zeigen) oder auch modellbedingt eine zu untersuchende Einheit bilden.

Insbesondere können aus den ermittelten Teilmengen zumindest zwei Teilmengen ausgewählt werden, für welche bestimmt wird, ob mehrere oder alle dieser ausgewählten Teilmengen zumindest eine gemeinsame Ursache haben. Wurden also zunächst die Teilmengen dadurch bestimmt, dass in ihnen die Streuungen jeweils im Wesentlichen durch die gleichen Ursachen bedingt sind, so werden nun verschiedenen Teilmengen gesucht, in denen die Streuung durch für diese Teilmengen gemeinsame Ursachen bedingt werden.

Es werden erfindungsgemäß aus den ermittelten Teilmengen zumindest zwei Teilmengen ausgewählt, für welche bestimmt wird, ob es zumindest einen Streueffekt gibt, der sich nur auf einen Teil dieser Teilmengen auswirkt.

Diese Teilmengen sollen im Folgenden mit $A_1,...,A_n$ mit $n{\geq}2$ bezeichnet werden, wobei n die Zahl der hierbei betrachteten Teilmengen darstellt.

Zur Bestimmung, ob es zumindest einen Streueffekt mit entsprechender Ursache gibt, der nur in einer Teilmenge von $A_1,...,A_n$ auftritt, bzw. ob die Streuungen in diesen ausgewählten Teilmengen zumindest eine gemeinsame Ursache haben, wird wie im Folgenden beschrieben vorgegangen.

Es wird zunächst für jede der Teilmengen $A_r$, $r=1,...,n$ eine Ereignismatrix $X_r$ bestimmt, in der die Werte der Beobachtungsgröße für eine Vielzahl oder alle Punkte und zugehörige Zeitschritte des Objektes gegen alle Experimente eingetragen sind. Die Anzahl der betrachteten Experimente sei in diesem Fall m. Dabei entspricht jede Zeile einer der Beobachtungsgrößen an einem der Punkte zu einem Zeitpunkt und eine Spalte entspricht einem Experiment, also einer Messung und/oder Simulation. Selbstverständlich können Spalten und Zeilen hierbei vertauscht werden, so dass jede Spalte einer der Beobachtungsgrößen an einem der Punkte zu einem Zeitpunkt und eine Zeile einem Experiment, also einer Messung und/oder Simulation entspricht. Diese Ausführung ist zur zuerst genannten Äquivalent. Im folgenden soll die Erfindung entsprechend der zuerst genannten Version geschildert werden. Die im folgenden aufgeführten Formeln gelten für den Fall, dass Spalten und Zeilen vertauscht sind vollkommen analog, und der Fachmann kann die entsprechenden Formeln ohne Schwierigkeiten aufstellen.

Eine Beobachtungsgröße kann dabei ein skalarer Wert oder auch ein Element eines Vektors sein. Letzteres liegt zum Beispiel vor, wenn die Beobachtungsgröße selbst ein Punkt im Raum ist, dann nämlich enthält diese Größe die drei räumlichen Koordinaten. In einem Punkt zu einem Zeitpunkt mit dem Index $i$, der zu $A_r$ gehört, und im Experiment mit dem Index j werden die Werte der Beobachtungsgröße $x_{ij}$ dabei um einen Mittelwert $\bar{x}_i = \frac{1}{m}\sum_{j=1,...,m} x_{ij}$ dieser Werte der Beobachtungsgröße über mehrere oder alle Messungen und/oder Simulationen verschoben, es ist also der in $X_r$ eingetragene Wert $x'_{ij} = x_{iy} - \bar{x}_i$

Aus jeder der so bestimmten Ereignismatrizen $X_r$ wird dann jeweils eine quadratische Matrix $X_r^T X_r$ gebildet, so dass sich n quadratische Matrizen $X_1^T X_1, \quad . \; . \; . \; , \quad X_n^T X_n$ ergeben.

Für zumindest eine der zu betrachtenden Teilmengen $A_i$, mit $1{\leq}i{\leq}n$, wird nun eine Differenzmatrix

$$M_{diff} = X_i^T X_i - \lambda_{k_1} X_{k_1}^T X_{k_1} - ... - \lambda_{k_l} X_{k_l}^T X_{k_l}$$ bestimmt, wobei $k_j \in \{1,...,i-1,i+1,...,n\}$ ist mit $k_s{\neq}k_t$ für $s{\neq}$ und wobei außerdem $\lambda_{k_j} > 1$ für alle $k_j$ ist.

$M_{diff}$ ist also die Differenz zwischen einer der betrachteten Teilmenge zugeordneten quadratischen Matrix $X_i^T X_i$ und vorzugsweise allen, jener den anderen Teilmengen zugeordneten quadratischen Matrizen. Dabei werden jeweils die den anderen Teilmengen zugeordneten Matrizen mit einem Vorfaktor $\lambda$ multipliziert. $\lambda$ orientiert sich dabei jeweils an dem Quadrat des Verhältnisses der in der Teilmengen $A_i$ zu untersuchenden Streuung und der in $A_k$ noch als signifikant betrachteten Streuung. In der Praxis kann z.B. ein kleines Vielfaches dieses Wertes verwandt werden.

Es werden dann die Eigenwerte von $M_{diff}$ und jener der ausgewählten Teilmenge zugeordneten quadratischen Matrix $X_i^T X_i$ bestimmt. Es wird ferner die Anzahl von großen Eigenwerten von $X_i^T X_i$ und dem entsprechenden $M_{diff}$ gezählt. Dabei werden als große Eigenwerte jene Eigenwerte bezeichnet, deren Wert größer als eine vorgegebene Schwelle ist.

Aus der Anzahl dieser großen Eigenwerte kann nun bestimmt werden, ob die Streuung der Werte der Beobachtungsgröße in der betrachteten Teilmenge $A_i$ eine oder mehrere gemeinsame Ursachen mit der Streuung in einer der anderen Teilmengen $A_k$ hat.

Nun wird geschlossen, dass die Streuung der Werte der Beobachtungsgröße in der Teilmenge $A_i$ keine mit einer Streuung in einer der Teilmengen $A_{k_j}$, $k_j \in \{1,:..,i-1,i+1,...,n\}$ gemeinsame Ursache hat, wenn die Zahl großer Eigenwerte von $M_{diff}$ gleich jener von $X_i^T X_i$ ist.

Wenn die Zahl großer Eigenwerte von $M_{diff}$ kleiner als die Zahl großer Eigenwerte von $X_i^T X_i$ ist, wird daraus geschlossen, dass die Streuung der Werte der Beobachtungsgröße in der Teilmenge $A_i$ eine Anzahl an Ursachen hat, die auch Ursache der entsprechenden Streuung in zumindest einer der Teilmengen $A_{k_j}$, $k_j \in \{1,...,i\text{-}1,i\text{+}1,...,n\}$ sind. Dabei wird vorzugsweise auch die Zahl der mit zumindest einer der anderen Teilmengen gemeinsamen Ursachen bestimmt. Diese ist gerade die Differenz der Anzahl großer Eigenwerte von $M_{diff}$ und $X_i^T X_i$.

Wenn $M_{diff}$ keine großen Eigenwerte hat, wird daraus geschlossen, dass alle Ursachen der Streuung in der Teilmenge $A_i$ auch Ursachen der Streuung in zumindest einer der Teilmengen $A_{k_j}$, $k_j \in \{1,...,i\text{-}1,i\text{+}1,...,n\}$ sind.

Vorzugsweise wird das oben beschriebene Verfahren mehrfach mit zumindest einem Wert, vorzugsweise mit einer Reihe geeigneter unterschiedlicher Werte, für die Vorfaktoren $\lambda_{k_j}$ der quadratischen Matrizen in der Differenzmatrix $M_{diff}$ durchgeführt. Auf diese Weise kann die Stabilität des Ergebnisses eingeschätzt werden.

Besonders bevorzugt werden dann nur jene Ursachen für eine Streuung als tatsächliche gemeinsame Ursachen bestimmt, die für die Mehrzahl oder alle der variierten $\lambda_{k_j}$ als gemeinsame Ursachen bestimmt werden. Hierdurch wird erreicht, dass nur jene Eigenwerte in die Bewertung, ob eine Ursache eine gemeinsame Ursache ist, einfließen, für die das Ergebnis hinreichend sicher ist.

Bevorzugterweise werden die verschiedenen $\lambda_{k_j}$ so gewählt, dass sie einen möglichst großen Bereich abdecken, wobei für einen zusammenhängenden Teilbereich jeweils eine gemeinsame Ursache erkannt wird. Betrachtet man in der Crashsimulation eine Streuung von 1 mm als signifikant und will typischerweise eine Streuung vom mehr als 20 mm untersuchen, so wird $\lambda_{k_j}$, z.B. etwa kleines Vielfaches des Quadrats dieser Werte, zum Beispiel als 1000, gewählt. Das Ergebnis ist umso signifikanter, je größer der Wert $\lambda_{k_j}$ gewählt werden kann.

Die Werte, deren Streuungen betrachtet werden, sind Werte von Beobachtungsgrößen an Punkten des Objektes. Die Teilmengen von Punkten des Objektes werden aus diesen Punkten ermittelt. Die Punkte des Objektes, an denen die Werte der Beobachtungsgrößen ermittelt, also z.B. gemessen oder simuliert, werden sind vorzugsweise gegenüber dem Material des Objektes fixiert. Dabei sind sie bei einem realen Objekt gegenüber dem realen Material fixiert, so dass eine Deformation des Materials zu einer Verschiebung der Punkte im Raum führt. Wird das Objekt durch ein Gitter beschrieben, sind die Punkte vorzugsweise gegenüber den Gitterpunkten fixiert, so dass eine Deformation des Objektes, die das Gitter verformt, zu einer Verschiebung der Punkte führt. Falls die Beobachtungsgröße eine andere als eine Verschiebung ist, können für bestimmte Fragestellungen die Punkte aber auch im Raum fixiert sein.

Die Beobachtungsgröße kann beispielsweise auch der Ort des Punktes im Raum sein. Dies ist insbesondere bei Verformungsvorgängen interessant, wie sie bei Crash-Tests auftreten. Eine Streuung der Werte würde dann bedeuten, dass ein gegebener Punkt in verschiedenen Messungen an unterschiedliche Orte verschoben wird. Wird die Streuung beispielsweise durch ein instabiles Beulverhalten verursacht, so wird der Ort eines Punktes in einem Teil der Messungen in die eine Richtung verschoben, und in einem anderen Teil in eine andere Richtung. Der Ort des Punktes ist also die Beobachtungsgröße, deren Werte streuen.

Die Beobachtungsgröße kann auch eine beliebig andere Eigenschaft des Objektes, des Materials oder des Modells sein, die vom Ort oder auch einer Gitterposition anhängig ist. Die Werte der Beobachtungsgröße sind also hier vom Ort oder der Gitterposition abhängig. Allgemein ist hier eine nicht vollständig konstante Abhängigkeit gemeint.

Beobachtungsgrößen in diesem Sinne können unter anderem der Ort der Punkte, eine Blechdicke an den fraglichen Punkten, eine Temperatur, eine Materialstärke, eine Schädigung, ein Versagen, ein Kraftvektor oder ein anderer Tensor und/oder eine Geschwindigkeit an den fraglichen Punkten sein. Auch alle anderen entsprechenden Materialeigenschaften und physikalischen Eigenschaften des Objektes oder des Modells können Beobachtungsgrößen sein.

Das erfindungsgemäße Verfahren ist besonders vorteilhaft einsetzbar, wenn Streuungen in einer Teilmenge zumindest zum Teil zumindest zwei Ursachen haben. Mit dem erfindungsgemäßen Verfahren ist es möglich, die Ursachen zu trennen.

Die Teilmengen, in denen die Streuungen durch die gleichen Ursachen verursacht werden, können besonders vorteilhaft bestimmt werden, indem für jede interessierende Teilmenge ausgehend von den Streuungen der Werte der fraglichen Beobachtungsgrößen an einem geeigneten Punkt in Raum und Zeit als Streuungsmuster weitere Punkte hinzugefügt werden, deren Streuung mit dem aktuellen Streuungsmuster hinreichend stark, das heißt mehr als eine vorbestimmte Schwelle, korreliert. Dabei kann das Streuungsmuster bei jeder Ergänzung überprüft und angepasst werden.

Anders ausgedrückt können die Teilmengen bestimmt werden, in denen die Streuung durch gleiche Ursachen ausgelöst werden, indem von Werten zumindest einer Beobachtungsgröße an zumindest einem Punkt des Objektes oder einer Gitterposition einerseits und einer Zeit andererseits ausgegangen wird, und dann Punkte des Objektes definiert werden, an denen die Werte der zumindest einen Beobachtungsgröße zu bestimmten Zeiten während des Verlaufes der Messung und/oder der Simulation ermittelt werden. Es wird dann die Streuung der Werte der zumindest einen Beobachtungsgröße an den Punkten des Objektes zu den bestimmten Zeiten über zumindest einige der Messungen bzw. Simulationen ermittelt. Hieraus wird dann bestimmt, an welchen der Punkte die Streuungen der Werte korrelieren und dadurch Punktbereiche als die gesuchten Teilmengen so gewählt, dass die Streuung der Beobachtungsgröße in diesen Bereichen jeweils eine Korrelation aufweisen.

Das Verfahren ist in einer vorteilhaften Ausführungsform auf Objekte anwendbar, die in bekannter Weise aus Bauteilen zusammengesetzt sind. Die Werte von Beobachtungsgrößen im oben genannten Sinne sind dann Werte zumindest einer Beobachtungsgröße einer Messung und/oder einer Simulation, beispielsweise eines Deformationsvorganges. Dabei werden die Raum-Zeit-Punkte jeweils eines Bauteils als jeweils eine der Teilmengen $A_1, ..., A_n$ gesetzt. Die Punkte zumindest eines der Bauteile werden zu einem Zeitpunkt als die genannte Teilmenge $A_i$ gesetzt, deren Streuung nach gemeinsamen Ursachen mit Streuungen in den Punkten aus den anderen Teilmengen untersucht wird.

Jene Bauteile, die räumlich zu dem gewählten $A_i$ unmittelbar benachbart liegen und zeitlich unmittelbar davor liegen, werden dann als die weiteren, anderen Teilmengen $A_{k_j}$, $k_j \in \{1,...,i-1,i+1,...,n\}$ gesetzt. Auf diese Weise kann der Einfluss von Streuungen in den benachbarten Bauteilen auf das zur Untersuchung ausgewählte Bauteil $A_i$ ermittelt werden.

Für die benachbarten Teilmengen $A_{k_j}$, $k_j \in \{1,...,i-1,i+1,...,n\}$ wird hierzu nun bestimmt, welcher der $A_{k_j}$, $k_j \in \{1,...,i-1,i+1,...,n\}$ Streuungen haben, die mit den Streuungen der ausgewählten Teilmenge $A_i$ zumindest eine gemeinsame Ursache haben. Es werden dann zumindest einige jener Teilmengen der $A_{k_j}$, $k_j \in \{1,...,i-1,i+1,...,n\}$, deren Streuungen mit $A_i$ zumindest eine gemeinsame Ursache haben, jeweils als neue $A_i$ gesetzt. Das Verfahren wird nun wie beschrieben mit den so gesetzten $A_i$ jeweils wiederholt, wobei jetzt jene zu dem neuen $A_i$ benachbarten Bauteile als neue $A_{k_j}$, $k_j \in \{1,...,i-1,i+1,...,n\}$ gesetzt werden. Wieder wird bestimmt, welche der $A_{k_j}$, $k_j \in \{1,...,i-1,i+1,...,n\}$ mit der ausgewählten Teilmenge $A_i$ Streuungen mit gemeinsamer Ursache haben und von diesen zumindest einige als neue $A_i$ gesetzt. Das Verfahren wird so lange wiederholt, bis jeweils ein Bauteil ermittelt wird, in dem die Streuung der Werte mit keinem weiteren benachbarten Bauteil zu einem früheren Zeitpunkt eine gemeinsame Ursache hat. Es kann daraus geschlossen werden, dass sich die so gefundenen Bauteile bei den betrachteten Experimenten instabil verhalten. Die Streuung in diesen Bauteilen kann als Ursache für die Streuung der Werte in dem zuerst als $A_i$ gesetzten Bauteil angesehen werden.

In dieser Ausführungsform wird also angenommen, dass das zu untersuchende Objekt aus Bauteilen aufgebaut ist, und innerhalb eines Bauteils Streuungen an Punkten dieses Bauteils durch die gleichen Ursachen verursacht werden. Es wird davon ausgegangen, dass eine Streuung in einem Bauteil sich durch die hierzu benachbarten Bauteile in das fragliche Bauteil ausbreitet und sich in die benachbarten Bauteile und wiederum durch die zu diesen benachbarten Bauteilen ausgebreitet hat. Eine Streuung breitet sich also jeweils von Bauteilen in zu diesen benachbarte Bauteile aus.

Um alle Ursachen einer Streuung in einem gegebenen Bauteil zu finden, ist es bevorzugt, dass, wenn bei Durchführung des Verfahrens einige der $A_{k_j}$, welche mit dem entsprechenden $A_i$ eine gemeinsame Ursache haben, nicht als $A_i$ gesetzt wurden, das Verfahren erneut durchgeführt wird, wobei diese $A_i$, die im jeweils vorigen Durchlauf nicht als $A_i$ gesetzt wurden, nun zumindest zum Teil als $A_i$ gesetzt werden, wobei das Verfahren vorzugsweise solange wiederholt wird, bis keine weitere Ursache für die Streuung gefunden werden kann. Es werden also alle möglichen Pfade von Streuungen durch die Bauteile, die von Ursachen von Streuungen zu dem fraglichen Bauteil führen, mit dem vorstehend beschriebenen Verfahren untersucht, bis keine weiteren Bauteile gefunden werden können, von denen die Streuung der Werte im fraglichen Bauteil verursacht sein könnte.

Erfindungsgemäß wird außerdem ein Verfahren zur Bestimmung von Ursachen von Streuungen von Werten zumindest einer Beobachtungsgröße in verschiedenen Teilmengen von Punkten eines Objektes angegeben. Während in dem oben beschriebenen Verfahren bestimmt wurde, ob Teilmengen gemeinsame Ursachen haben, werden in diesem Verfahren die Ursachen selbst bestimmt.

In diesem Verfahren werden die Ursachen der Streuungen in zumindest einer ersten Teilmenge der Mess- und/oder Simulationsergebnisse bestimmt. Dabei wird mittels des oben beschriebenen Verfahrens zur Ermittlung gemeinsamer Ursachen bestimmt, welche zu der betreffenden Teilmenge räumlich benachbarten und zeitlich unmittelbar vorausgehenden Teilmengen Streuungen mit zu Streuungen in der betreffenden Teilmenge gemeinsamen Ursachen haben.

Für zumindest einen Teil der so ermittelten Teilmengen, im folgenden zweite Teilmengen genannt, die Streuungen aufweisen, welchen mit Streuungen in der ersten Teilmenge gemeinsame Ursachen haben, werden nun wiederum zu diesen zweiten Teilmengen räumlich benachbarte und zeitlich unmittelbar vorhergehende Teilmengen nach dem vorstehend beschriebenen Verfahren zur Ermittlung gemeinsamer Ursachen bestimmt, die Streuungen aufweisen, die mit den Streuungen der ersten Teilmenge gemeinsame Ursachen haben.

Für zumindest einen Teil der so ermittelten Teilmengen, dritte Teilmengen genannt, werden dann wiederum zeitlich unmittelbar vorhergehende und räumlich unmittelbar benachbarte Teilmengen bestimmt, die Streuungen aufweisen, die mit den Streuungen in der fraglichen ersten Teilmenge gemeinsame Ursachen haben.

Das Verfahren wird solange mit jeweils zeitlich unmittelbar vorausgehenden und räumlich unmittelbar benachbarten Teilmengen wiederholt, bis keine weiteres Teilmenge mehr ermittelbar ist, deren Streuungen mit Streuungen unmittelbar benachbarten und zeitlich unmittelbar vorhergehenden Teilmengen gemeinsame Ursachen haben.

Jene zuletzt ermittelten Teilmengen, deren Streuungen keine gemeinsame Ursache mit Streuungen benachbarter Teilmengen und zeitlich vorhergehenden Teilmengen haben, werden als jene die Ursache enthaltenden Teilmengen gesetzt. Die Streuung in dieser Teilmenge wird also als die zu ermittelnde Streuung und damit als Ursache gesetzt. Die Streuung der Ergebnisse in diesen zuletzt ermittelten Teilmengen ist also eine zu ermittelnde Ursache der Streuung in der entsprechenden ersten Teilmenge.

Im Sinne dieses Verfahrens ist eine Teilmenge eine Menge von Punkten des Objektes zu einem bestimmten Zeitpunkt. Eine unmittelbar benachbarte Teilmenge ist eine solche, die Punkte aufweist, die zu Punkten der fraglichen Teilmenge benachbart sind, was bedeutet, dass keine Punkte längs eines geeigneten Pfades durch das Gitter zwischen diesen benachbarten Punkten liegen.

Zwei Teilmengen sind zeitlich benachbart, wenn ihre Zeitpunkte in der Reihe der beobachteten Zeitpunkte benachbart sind, d.h. unmittelbar aufeinander folgen. Eine unmittelbar vorhergehende Teilmenge ist eine solche, deren Zeitpunkt unmittelbar vor dem Zeitpunkt der fraglichen Teilmenge liegt.

Es kann bei der Durchführung dieses Verfahrens jeder Ast der benachbarten Teilmengen bis zum Ende durchlaufen werden. In diesem Fall erhält man alle Ursachen der Streuung in der ersten Teilmenge. Es ist aber auch möglich nur eine oder einen Teil der Äste zu durchlaufen, so dass man nur eine oder einen Teil der Ursachen erhält.

Erfindungsgemäß wird außerdem ein Verfahren angegeben, mit dem Ausbreitungswege von Streuungen von Werten von Beobachtungsgrößen in Messungen und/oder Simulationen bestimmbar sind.

Dabei werden wie oben beschrieben gemeinsame Ursachen bestimmt, und jene Bauteile oder Teilmengen die im Laufe des Verfahrens als $A_i$ gesetzt werden, als Ausbreitungsweg bestimmt. Es können sich, wenn mehrere zweite benachbarte Teilmengen betrachtet werden, durch dieses Verfahren mehrere Ausbreitungswege von Ursachen zur ersten Teilmenge., ergeben. Ein Weg ist dabei ein Menge von Teilmengen; die zeitlich jeweils paarweise unmittelbar benachbart sind bzw. unmittelbar vorangehend sind und räumlich benachbart sind, wobei für jeden Zeitpunkt zwischen jenem der ersten Teilmenge und jenem der die Ursache des entsprechenden Weges aufweisenden Teilmenge genau eine Teilmenge enthalten ist.

Mit Hilfe des erfindungsgemäßen Verfahrens können die Ursachen von Streuungen in Messwerten oder Simulationswerten kategorisiert werden, insbesondere auch bei überlappenden Einflüssen. Verglichen mit den bisher bekannten Ansätzen erlaubt dieses Verfahren, verschiedene Einflüsse von Streuungen zu unterscheiden.

Die Erfindung ist unter anderem für Crash-Analysen anwendbar, bei denen beispielsweise Streuungen durch Buckling auftreten können. Sollten sich die Modelle zum Beispiel als Folge von Parametervariationen unterscheiden, so erlaubt das erfindungsgemäße Verfahren auch, Einflüsse von Parametern und Streuungen zu trennen indem man über alle Experimente die Korrelation zwischen den Parametern eines Experiments und den Anteilen der jeweiligen Streueffekte am Ergebnis des Experiments bestimmt.

Die Erfindung ist ferner immer dann auf technische Fragestellungen mit einem geometrischen Hintergrund anwendbar, wenn sich die Ergebnisse des physikalischen Tests oder der numerischen Simulation von Experiment zu Experiment stark unterscheiden, obwohl sich Modell oder Rahmenbedingungen nur geringfügig geändert haben. Dies können dem Crash verwandte Anwendungsfelder sein. Ähnliche Probleme wurden aber auch bei Strömungsproblemen in Zusammenhang mit Wirbelbildung, bei Rückfederung in Umformprozessen sowie bei Lunkerbildung in der Erstarrung von Schmelzen beobachtet.

Im Folgenden soll die Erfindung anhand einiger Beispiele näher erläutert werden.

Es zeigt

Figur 1    ein Beispiel von Teilmengen mit Streuungen unterschiedlicher Ursachen,

Figur 2    beispielhaft einen Deformationsprozess einer Platte,

Figur 3    Eigenvektoren zu den größten Eigenwerten im in Figur 2 gezeigten Beispiel, und

Figur 4    Streumoden aus Quadrant III im in Figur 2 gezeigten Beispiel.

Im Folgenden soll das erfindungsgemäße Verfahren anhand eines ersten Beispiels beschrieben werden. Dieser Ansatz basiert auf Haupkomponentenanalyse (Prinziple Component Analysis, PCA) von Simulationsergebnissen, ist aber auf Messergebnisse direkt übertragbar.

Es sei

$$\hat{X} = \left(\hat{x}_{ij}\right)_{1 \leq i \leq n; 1 \leq j \leq m}$$

eine Matrix, die für m physikalische oder numerische Experimente die Knotenkoordinaten von einer Teilmenge aller gemessenen oder simulierten Referenzpunkte auf dem Modell für einen oder mehrere Zeitschritte bzw. Zeitpunkte enthält. n sei dabei das Produkt aus der Anzahl der betrachteten Zeitschritte, der Anzahl der betrachteten geometrischen Punkte und der Anzahl der betrachteten Größen pro Punkt (z.B. 3 im Falle von Verschiebungen im Raum). In der Regel liegen sehr viele Punkte, aber wenige Experimente vor.

Es ist

$$X = \left(x_{ij}\right)_{1 \le i \le n; 1 \le j \le m}$$

die entsprechende Matrix der Abweichungen vom Zeilenmittelwert, d.h.

$$\bar{x}_i = \frac{1}{m} \sum_{j=1,m} \hat{x}_{i,j} \quad \text{und} \quad x_{i,j} = \hat{x}_{i,j} - \bar{x}_i \quad .$$

Dann lässt sich die Matrix $X$ im allgemeinen wie folgt in eine Matrix $U$, eine Diagonalmatrix $D$ und eine Koeffizientenmatrix $K$ eindeutig zerlegen:

$$X = UDK^T$$

$$\text{mit} \quad U = \left(u_{ij}\right)_{1 \le i \le n; 1 \le j \le m} \quad , \quad D = \left(d_{ii}\right)_{1 \le i \le p; 1 \le j \le m} \quad \text{und} \quad K = \left(k_{ij}\right)_{1 \le i \le p; 1 \le j \le m} .$$

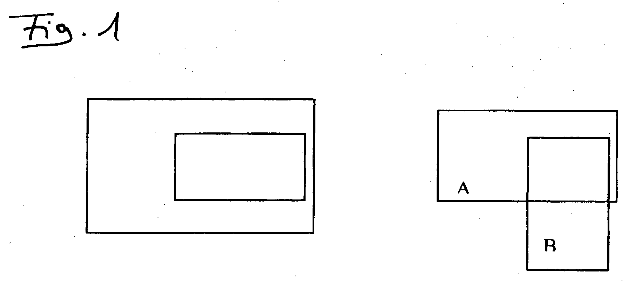

Es ist $U^T U = id_m$ und $K^T K = id_m$ , wobei $id_m$ die Einheitsmatrix der Größe $m$ ist.
Die Einträge $d_{ii}$ der Diagönalmatrix sind dabei der Größe nach absteigend angeordnet, es gilt also $d_{ii} \le d_{jj}$ wenn $i \lessgtr j$.
Um die Zerlegung $X=UDK^T$ zu berechnen, werden die Eigenwerte und Eigenvektoren von $X^T X$ berechnet, so dass. sich $X^T XK = KD^2$ ergibt. U ergibt sich dann aus $U = XKD^{-1}$.
Wie aus der Theorie der Principle Component Analysis (Haüptkomponentenanalyse) bekannt, stellen Tripel von zusammengehörigen Elementen aus Spalten von U Richtungen der Streuungen der Experimente dar, die entsprechenden Einträge der Diagonalmatrix repräsentieren den Einfluss dieser Größe und die Spalten der Matrix $K^T$ stellen die jeweiligen Beiträge der Richtungen zu einem Experiment dar.
Es wird davon ausgegangen, dass Streuungen der Ergebnisse an bestimmten Stellen des Objektes oder Modells starten und sich dann von dieser Stelle aus ausbreiten.
Im Folgenden soll beispielhaft der Fall zweier Streuungen betrachtet werden. Figur 1 zeigt jeweils zwei Situationen von Trägern zweier Streuungen $A$ und $B$.
Als Träger einer verursachenden Streuung wird die Menge aller Raum-Zeit-Punkte oder Gitterpunkte und Zeitpunkte bezeichnet, an denen Streuungen auftreten, die durch die betreffende verursachende Streuung ausgelöst werden.
Die Betrachtung kann mit Gitterpunkten bzw. Gitterknoten, oder mit Punkten durchgeführt werden, die gegenüber dem Objekt oder dem Material des Objektes fixiert sind. Die Werte der Beobachtungsgrößen können abhängig vom Ort und/oder der Gitterposition und/oder der Zeit sein.
Das linke Teilbild von Figur 1 zeigt eine erste beispielhafte Situation. Hier ist der Träger der Streuung $B$ zeitlich und räumlich im Träger der Streuung $A$ enthalten. Das bedeutet, dass überall dort in Zeit und Raum, wo eine Streuung durch die Streuung $B$ verursacht wurde, auch eine Streuung vorliegt, die durch die Streuung $A$ verursacht wurde. Andererseits gibt es Bereiche, an denen die Streuung der Werte durch die Streuung $A$ verursacht wird, aber nicht durch $B$. Dies ist der Bereich außerhalb des Trägers von $B$ (inneres Rechteck) aber innerhalb des Trägers *von A* (äußeres Rechteck).
Das rechte Teilbild beschreibt eine zweite Situation, wo es drei verschiedene Bereiche gibt. Zum einen gibt es einen Bereich, in dem die Streuung der Werte nur durch die Streuung $A$ verursacht ist, außerdem einen Bereich, in dem die Streuung nur durch die Streuung $B$ verursacht ist und schließlich einen Bereich, in dem sich die Träger von $A$ und *von B* überlappen, wo also die Streuung durch $A$ und durch $B$ verursacht ist.
Ein Beispiel für die im linken Teilbild gezeigte erste Situation ist ein Längsträger, auf dem es hintereinander zwei Bereiche für Buckling gibt. Die gezeigten Träger können dabei z.B. die Situation auf einer Stirnwand eines PKW wiedergeben, deren Position durch eine Verformung des Längsträgers bestimmt wird. Der Träger bzw. Einflussbereich der im vorderen Teil des Längsträgers verursachten Streuung überdeckt vollständig den Einflussbereich oder Träger der im hinteren Teil des Längsträgers verursachten Streuung.

Ein Beispiel für die im rechten Teilbild gezeigte zweite Situation ist die Streuung auf einer Stirnwand, wenn die Streuungen A und B auf jeweils einem von zwei Längsträgern eines Personenkraftwagens die Streuung auf der Stirnwand beeinflussen.

In beiden Situationen kann als Messgröße oder Beobachtungsgröße z.B. der Ort der Gitterpunkte des Modells oder PKW angesehen werden. Streuung der Orte tritt dadurch auf, dass die Gitterpunkte im Buckling in unterschiedliche Richtungen verschoben werden. Entsprechend werden auf den jeweiligen Trägern die anderen Punkte in unterschiedliche Richtungen verschoben. Andere mögliche Messgrößen sind z.B. Zeitpunkt der Messung, Blechdicke, Temperatur, Materialstärke, Schädigung, Versagen, Kraftvektor oder ein anderer Tensor und/oder Geschwindigkeit an den Punkten.

Die Hauptkomponentenanalyse liefert in beiden Situationen für die zwei Hauptkomponenten Linearkombinationen der beiden Effekte, da die Berechnung des größten Eigenwertes und zugehörigen Eigenvektors durch

$$\max_{v}\left(\frac{v^T X^T X v}{v^T v}\right)$$

erfolgen kann und so die Streuung über die Norm der Beiträge der Experimente maximiert wird. Wird das Verfahren aus DE 10207503 B3 unter Verwendung des Ähnlichkeitsfunktionals auf die beiden Situationen angewandt, so wird in der ersten Situation der Träger von B und der Träger von B ohne A jeweils als in sich ähnlich erkannt. In der zweiten Situation werden drei in sich ähnliche Bereiche identifiziert, nämlich A ohne B, B ohne A und die Schnittmenge von A und B.

Es sei darauf hingewiesen, dass die Zahl der als in sich ähnlich erkannten Bereiche durch Wahl geeigneter Schwellenwerte für die Ähnlichkeit beeinflusst werden kann. Die Differenzanalyse erlaubt dann, diese Bereiche als solche zu erkennen, in denen die zwei gleichen Streueffekte dann mit unterschiedlicher Stärke auftreten.

Als in sich ähnliches Bereiche werden hier solche zusammenhängende Bereiche bezeichnet, in denen die Streuung innerhalb der gewählten Genauigkeit bzw. Schwellen durch die gleiche Ursache ausgelöst wird.

Da unterschiedliche physikalische Effekte normalerweise in unterschiedlichen Bereichen und/oder zu unterschiedlichen Zeitpunkten den Beginn einer Streuung verursachen, sollen in allen Situationen die Träger und damit die Effekte unterschiedlicher Ursachen getrennt werden können.

Die Differenz-Hauptkomponentenanalyse, d.h. das Verfahren der vorliegenden Erfindung, maximiert nun die Streuung in einem Teilbereich des Modells und des Zeitablaufes unter der Nebenbedingung, dass in einem anderen Teilbereich des Modells und/oder in einem anderen Zeitfenster, bzw. zu einem anderen Zeitpunkt, keine oder nur geringe Streuung auftritt.

Bezeichnet also

A eine erste Teilmenge aller Gitterknoten in einem bestimmten Zeitfenster oder zu einem bestimmten Zeitpunkt und $X_A$ die zugehörige Ereignismatrix und

B eine zweite Teilmenge aller Knoten in einem möglicherweise anderen Zeitfenster und $X_B$ die dazugehörige Ereignismatrix, und

$X_G$ die Ereignismatrix aller Knoten und Zeitpunkte, so wird die Linearkombination v der Simülationsergebnisse gesucht, für die gilt:

$$v^T X_A^T X_A v \geq \lambda v^T X_B^T X_B v$$

mit $v^T v = 1$.

v ergibt sich als Eigenvektor bei der Eigenwertanalyse von $M_{A-\lambda B} = X_A^T X_A - \lambda X_B^T X_B$.

Für die Linearkombination vder Simulationserg,ebnisse ergibt sich für die Teilmenge A der Knoten eine deutlich stärkere Streuung als auf der Teilmenge B der Knoten. Damit kann man für unterschiedliche A die folgende Differenzmatrix aufstellen und deren Eigenwerte und Eigenvektoren berechnen:

$$M_{A-\lambda B} = X_A^T X_A - \lambda X_B^T X_B \; .$$

$\lambda$ wird hier bevorzugt groß gewählt. In diesem Beispiel wurde $\lambda=10000$ verwendet, aber auch $\lambda=100$ wurde in vielen Fällen sinnvoll eingesetzt.

Es werden nun die größten Eigenwerte von $M_{A-\lambda B}$ mit den größten Eigenwerten der Matrix $X_A^T X_A$ verglichen. Dabei können sich die folgenden Ergebnisse ergeben:

Zum einen kann der größte Eigenwert von $M_{A-\lambda B}$ gleich jenem von $X_A^T X_A$ sein. Dies bedeutet, dass die Streuung $B$ die Streuung im Träger *von A* nicht beeinflusst. Der Term $\lambda X_B^T X_B$ trägt zu $M_{A-\lambda B}$ kaum oder nicht bei.

Anderseits kann sich ergeben, dass der größte Eigenwert von $M_{A-\lambda B}$ deutlich kleiner ist als jener von $X_A^T X_A$, was darauf hindeutet, dass der Term $\lambda X_B^T X_B$ wesentlich beiträgt, also auch die Streuung $B$ die Streuung auf dem Träger von $A$ beeinflusst oder die Streuung im Träger von $A$ die gleiche Ursache $B$ hat *(A ist also mit B identisch)*.

Betrachtet man nun in Figur 1 in der zweiten Situation im rechten Teilbild, die Bereiche *"A ohne B"* und *"B ohne A"* und die jeweiligen Differenzmatrizen $M$, so sieht man, dass die Streuungen in diesen Bereichen keine gemeinsame Ursache haben. Der größten Eigenwerte der Differenzmatrix ist also im Wesentlichen gleich jenem der entsprechenden $X^T X$.

Die jeweiligen Eigenvektoren von $X_A^T X_A$ und $X_B^T X_B$ zu den maximalen Streueffekten (Eigenwerten) bestimmen Linearkombinationen der Simulationsergebnisse für die maximale Streuung auf den jeweiligen Teilgebieten. Wendet man diese Linearkombinationen auf die vollständigen, alle Teilgebiete umfassenden, Simulationsergebnisse an, so ergeben sich Fortsetzungen des Streueffektes über die zunächst betrachteten Teilgebiete hinaus.

Betrachtet man in Figur 1 in der ersten Situation im linken Teilbild den Bereich "$B$", also den Träger von $B$, und bildet die Differenzmatrix in oben beschriebener Weise zum Bereich *"A ohneB"*, so ergibt sich erneut, dass es eine signifikante Streuung im Bereich "$B$" gibt, ohne dass im Bereich *"A ohne B"* eine Streuung auftritt. Auch hier bestimmt der Eigenvektor $v$ zum größten Eigenwert von $X_B^T X_B$ die Linearkombination der Simulationsergebnisse mit der maximalen Streuung.

Vergleicht man aber umgekehrt *"A ohne B"* mit *"B"*, so findet man, dass sich die Effekte nicht voneinander trennen lassen. Fixiert man die Streuung im Bereich "$B$" indem man die Matrix $M_{B-\lambda A ohne B}$ im Orthogonalraum zu $v$ betrachtet und den größten Eigenwert dieser Matrix bestimmt, so stellt man fest, dass es keine positiven Eigenwerte mehr gibt. Der Bereich "$B$" trägt also keine weitere Streuung bei. Bestimmt man also die Eigenwerte und Eigenvektoren von $X_{A ohne B}^T X_{A ohne B}$, so bestimmt erneut der größte Eigenwert die Linearkombination der Ergebnisse mit der maximalen Streuung, für den die Streuung im Bereich "$B$" vorgegeben ist.

Für Fälle mit mehr als zwei Ursachen kann das Verfahren ohne weiteres entsprechend angewandt werden, wobei die $X^T X$ der weiteren Ursachen mit entsprechenden Vorfaktoren $\lambda$ in der Differenzmatrix berücksichtigt werden.

Die $\lambda$ können bei den oben beschriebenen Verfahren variiert werden um eventuelle Einflüsse aufgrund des konkreten Wertes auszuschließen. Dabei wird das Verfahren mehrfach durchgeführt, jeweils mit unterschiedlichen Werten für $\lambda$.

Im Folgenden soll beschrieben werden, wie die oben verwendeten Teilgebiete bzw. Teilmengen *"A", "B", "A ohne B"* und *"B ohne A"* gefunden werden können. Es sind hier verschiedene Ansätze möglich.

Eine Möglichkeit besteht darin, für jede Teilmenge ausgehend von den Streuungen der Werte der ausgewählten Beobachtungsgrößen eines geeigneten Punktes in Raum und Zeit als Streuungsmuster weitere Punkte hinzuzufügen, deren Streuung mit dem aktuellen Streuungsmuster hinreichend stark korreliert, wobei das Streuungsmuster bei jeder Ergänzung überprüft und bei Bedarf angepasst wird.

Die Teilmengen können hierbei bestimmt werden, indem von Werten zumindest einer Beobachtungsgröße an zumindest einem Punkt des Objektes oder einer Gitterposition einerseits und einer Zeit andererseits ausgegangen wird, Punkte des Objektes definiert werden, an denen die Werte der zumindest einen Beobachtungsgröße zu bestimmten Zeiten während des Verlaufs der Messung und/oder der Simulation ermittelt werden, die Streuung der Werte der zumindest einen Beobachtungsgröße an den Punkten des Objektes zu den bestimmten Zeiten über zumindest einige der Messungen und/oder Simulationen ermittelt wird,

ermittelt wird, an welchen der Punkte die Streuungen der Werte korrelieren und Ortsbereiche als die Teilmengen so gewählt werden, dass die Streuung der Beobachtungsgröße in den Ortsbereichen jeweils eine Korrelation aufweisen.

Hier kann das in DE 10207503 B3 verwendete Clustering-Verfahren auf Basis des Ähnlichkeitsfunktionals zum Einsatz kommen, wobei alle Knoten zu allen Zeitschritten betrachtet werden können. Die Punkte eines Clusters zeigen ähnliches Streuverhalten und entsprechen den zu untersuchenden Teilgebieten bzw. Teilmengen.

Eine andere Möglichkeit besteht, wenn das Modell als aus Bauteilen aufgebaut oder in Bauteile unterteilt angesehen werden kann. Hier wird die Streuung zu einem bestimmten Zeitpunkt auf einem bestimmten Bauteil betrachtet. Die oben erwähnten Teilmengen bzw. Teilbereiche sind hierbei aus entsprechenden Bauteilen zusammengesetzt. Es kann zum Beispiel die Streuung der Stirnwand zum Zeitpunkt der stärksten Kontraktion des Modells betrachtet werden.

Räumlich benachbarte Bauteile sind hierbei solche, die unmittelbar aneinander grenzen. Zeitlich benachbarte und unmittelbar vorhergehende Bauteile sind solche, die in angrenzenden Zeitpunkten vorliegen. Dabei ist also z.B. ein Bauteil zu sich selbst zu einem vorhergehenden Zeitpunkt zeitlich benachbart.

Man geht von einem ersten der Bauteile aus, auf welchem eine Streuung auftritt, deren Ursache untersucht werden soll. Man sucht dann zu einem vorhergehenden, vorzugsweise unmittelbar vorhergehenden, Zeitpunkt jene unmittelbar zum ersten Bauteil benachbarten Bauteile, welche die Streuung des ersten Bauteils signifikant beeinflussen. Diese Beeinflussung kann z.B. mittels der Differenz-Hauptkomponentenanalyse (Differenz-PCA) gefunden werden. Diese Bauteile werden im folgenden zweite Bauteile genannt.

Anschließend werden dann die unter den zeitlich vorhergehenden und räumlich zu den zweiten Bauteilen benachbarten Bauteilen jene Bauteile gesucht, welche die Streuung auf den zweiten Bauteilen signifikant beeinflussen.

Dieses Vorgehen wird solange wiederholt, bis sich kein weiteres zeitlich unmittelbar vorhergehendes Bauteil finden lässt, das die Streuung auf dem zuletzt betrachteten Bauteil signifikant beeinflusst. Auf diese Weise lassen sich ein Teil der Ursachen oder alle Ursachen einer Streuung ermitteln. Jene Teilmengen bzw. Bauteile, auf denen Streuungen ermittelt wurden können außerdem auch als Ausbreitungsweg der Streuungen angesehen werden, so dass auch ein Verfahren zur Ermittlung der Ausbreitungen erfindungsgemäß ist.

Es kann hierbei die Streuung in jedem zweiten und/oder weiteren vorhergehenden Bauteil verfolgt werden, es ist aber auch möglich, die Streuung nur auf einem Teil der Bauteile zu verfolgen. Man erhält jene Bauteile als Ursachen der Streuung auf dem ersten Bauteil, auf denen die Streuung von keinem vorhergehenden Bauteil signifikant beeinflusst wird.

Betrachtet man den größten Eigenwert der DifferenzHauptkomponentenanalyse zwischen dem ersten Bauteil (Referenzbauteil) zum ersten Zeitpunkt (Referenzzeitpunkt, an dem die Streuung analysiert werden soll) und die Menge aller allen anderen insignifikanten Kombinationen aus Bauteilen und Zeitpunkten, so findet man einen Vektor $v$ als Eigenvektor zum maximalen Eigenwert mit möglichst kleinem Träger. Nimmt man die Elemente dieses Vektors $v$ als Koeffizienten für eine Linearkombination der Simulationsergebnisse, so erhält man einen (Streu-)Vektor im durch die Simulationsergebnisse aufgespannten Raum mit möglichst kleinem Träger. Die Analyse wird dann jeweils in dem zum Vektor $v$ gehörigen orthogonalen Unterraum des Raumes der Koeffizienten der Simulationsergebnisse fortgesetzt, bis alle Einflussfaktoren, also alle Ursachen, bestimmt sind.

Findet man im Laufe des Prozesses eine Kombination aus Bauteil und Zeitpunkt, also ein Bauteil zu einem bestimmten Zeitpunkt, welche im Sinne der Hauptkomponentenanalyse nur einen signifikanten Eigenwert und Streuvektor besitzt, so nimmt man diese Kombination als Referenzobjekt und bestimmt einen möglichst kleinen Träger mit maximaler Streuung auf diesem Bauteil, z.B. durch Hauptkomponentenanalyse wie oben beschrieben.

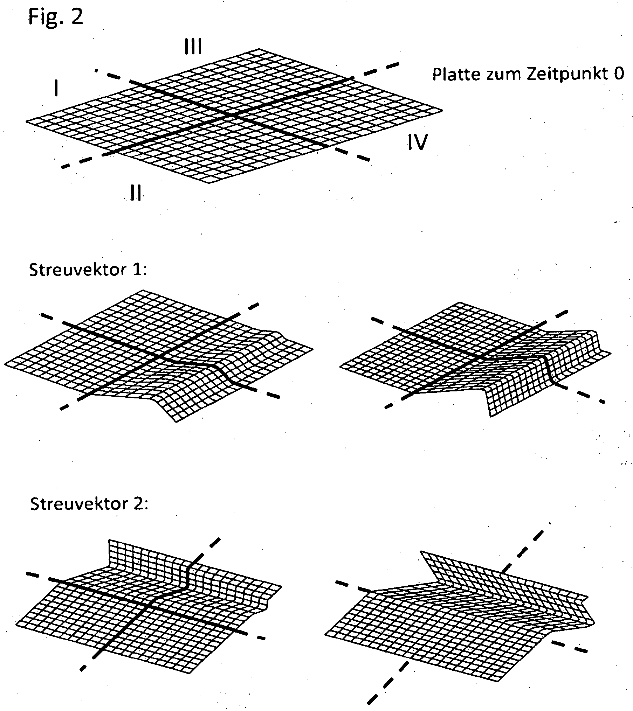

Figur 2 zeigt ein Beispiel des erfindungsgemäßen Verfahrens angewandt auf Bauteile. Hier wird die Analyse der Verformung einer Platte verdeutlicht.

Es wurden zu 31 äquidistanten Zeitpunkten, beginnend bei State 0 (ein State ist die Gesamtheit der Ortskoordinaten aller Punkte zu dem betreffenden Zeitpunkt, also ist z.B. State 0 die Gesamtheit aller Ortskoordinaten zum Zeitpunkt 0, d.h. zu Beginn des Vorgangs), betrachtet. Figur 2 zeigt drei verschiedene Verformungen der Platte jeweils zum State 15 und 30 sowie zuoberst die Platte zum State 0.

Die linke Spalte der Teilbilder zeigt den State 15 zum Zeitpunkt $t_1$, die rechte Spalte den State 30 zum Zeitpunkt $t_2$. Zu oberst ist die Platte zum Zeitpunkt 0 (State 0) mit der Aufteilung in Quadranten gezeigt. In der ersten Zeile darunter der Streuvektor 1, darunter der Streuvektor 2 und darunter der Streuvektor 3. Ein Streuvektor ist hier als $Xv$ gegeben.

Es soll die Streuung im Quadranten IV betrachtet werden. Diese Streuung wird vom Streuvektor 1 und 2 beeinflusst, die jeweils auch im Quadranten II und III Streuungen aufweisen. Der Streuvektor 3 trägt nur im Quadranten II bei.

Es wurden dann in 200 Experimenten diese 3 Streuvektoren miteinander linear kombiniert. Dabei wurden die Koeffizienten zufällig zwischen 0 und 1 ausgewählt. Die Hauptkomponentenanalyse ergab dabei die folgende Verteilung der größten Einträge in der Differenzmatrix D (die Einträge entsprechen hier der Wurzel aus den Eigenwerten):

2.56
2.46
0.31
0.29
0.11

0.10.

Dies zeigt, dass im Quadranten IV zum Endzeitpunkt 2 Streuungen dominieren, die durch die ersten beiden Werte zu erkennen sind.

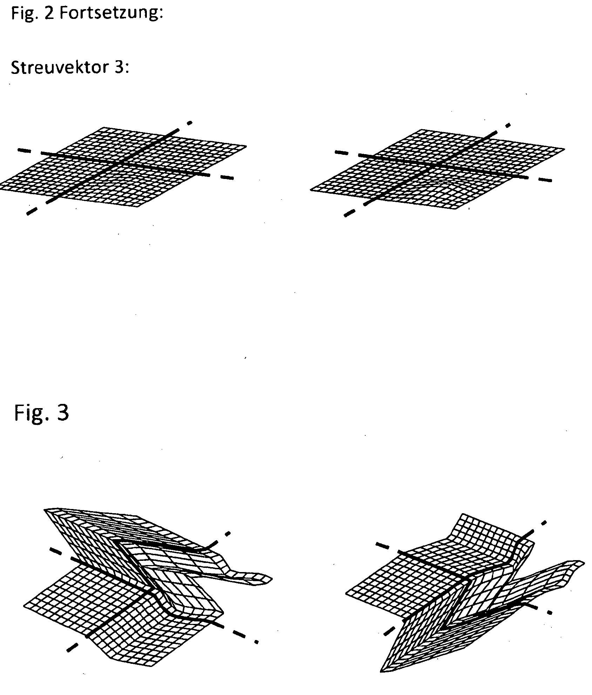

Figur 3 zeigt die beiden Vektoren, die zu den beiden größten Eigenwerten 2.56 und 2.46 gehören. Man sieht deutlich, dass in beiden Fällen eine Linearkombination der beiden vorgegebenen Streuvektoren vorliegt.

Wendet man das Verfahren jetzt auf den Quadranten III im State 15 an, so findet man folgende Eigenwerte:

1.59
0.20
0.07.

Es gibt also einen dominierenden Streuvektor. Die Differenzhauptkomponentenanalyse mit $\lambda$ = 10000 zu den anderen Quadranten, jeweils im State 15 und im State 30 ergeben folgende Eigenwerte:

| Quadrant I | | Quadrant II | | Quadrant III | |
|---|---|---|---|---|---|
| State 15 | State 30 | State 15 | State 30 | State 15 | State 30 |
| 1.59 | 1.59 | 1.57 | 1.56 | 0.26 | 0.07 |
| 0.20 | 0.20 | 0.16 | 0.18 | 0.04 | 0.01 |
| 0.07 | 0.07 | 0.06 | 0.06 | 0.02 | 0.00 |

Offensichtlich haben Quadrant I und Quadrant II zu Quadrant III keine gemeinsamen Effekte, aber es gibt starke gemeinsame Einflüsse zu Quadrant IV.

Die Differenzhauptkomponentenanalyse von Quadrant IV, State 30 zu Quadrant II, State 15 ergibt die Eigenwerte:

2.42
0.30
0.10.

Damit fehlt genau einer der beiden großen Eigenwerte. Die Streuung im Quadranten III zum State 15 verursacht also auch eine Streukomponente im Quadranten IV zum State 30. Der zugehörige Streuvektor ergibt sich aus der Differenzhauptkomponentenanalyse von Quadrant III, State 15 mit Quadrant I, State 15 und 30 sowie Quadrant II, State 15 und 30. Die Eigenwerte hierbei sind

1.56
0.18
0.06.

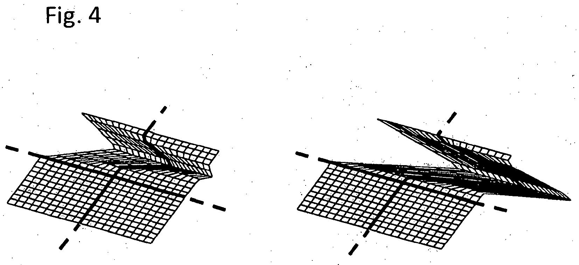

Die Streuvektoren sind in Figur 4 gezeigt. Links ist die Streumode aus Quadrant III im State 15 zu sehen und rechts die gleiche Streumode im State 30.

Auf die gleiche Weise kann man erkennen, dass die Streuung aus Quadrant II Einfluss auf die Streuung aus Quadrant IV hat.

Stellt man anschließend die Streumatrix im Orthogonalraum zu den beiden Streuvektoren aus Quadrant III und Quadrant II auf, so hat die Matrix folgende Eigenwerte:

0.71
0.46
0.30.

Es zeigt sich durch Vergleich zu den ursprünglichen Eigenwerten von 2.56, dass die zwei wesentlich beeinflussenden Streuungen korrekt erfasst wurden.

Es kann die Mehrzahl der Werte unter zumindest einer gleichen Randbedingung der Messung und/oder der Simulation, vorzugsweise unter vollständig gleichen kontrollierbaren Randbedingungen gewonnen werden. Die Werte können auch unter Verwendung von für die einzelnen Experimente und/oder Simulationen unterschiedlichen Sätzen von Entwurfsparametern des Objektes gewonnen werden und dann bevorzugt durch Korrelation zwischen den Entwurfsparametern und/oder den Randbedingungen einerseits und den Eigenwerten andererseits Abhängigkeiten zwischen Veränderungen der Entwurfsparamter bzw. Randbedingungen und Veränderungen der Lösung festgestellt werden.

**Patentansprüche**

1. Verfahren zur rechnergestützten Ermittlung, ob Streuungen von Werten zumindest einer Beobachtungsgröße in verschiedenen Teilmengen $A_r$ von Punkten eines realen Objektes oder eines Modells eines realen Objektes in einer Simulation gemeinsame Ursachen haben, wobei

- die zumindest eine Beobachtungsgröße eine Materialeigenschaft oder physikalische Eigenschaft des Objektes oder des Modells ist,
- eine Ursache für eine Streuung in den geometrischen Verhältnissen und/oder den Materialeigenschaften des Objekts liegt
- die werte Ergebnisse von Experimenten in Form von Simulationen und/oder Messungen der zumindest einen Beobachtungsgröße an einer Vielzahl an Punkten des Objektes zu bestimmten Zeiten sind, und wobei
- die Teilmengen der Punkte des Objektes derart bestimmt werden, dass in den Teilmengen die Streuungen der werte der zumindest einen Beobachtungsgröße jeweils eine Korrelation aufweisen,

und in dem Verfahren

- für zumindest einige der Teilmengen $A_1$, ..., $A_n$ mit $n \geq 2$ bestimmt wird, ob die jeweiligen Streuungen in diesen Teilmengen für mehrere oder alle dieser Teilmengen zumindest eine gemeinsame Ursache haben, indem
- für jede der Teilmengen $A_r$, r=1, ... ,n eine Ereignismatrix $X_r$ bestimmt wird, in der

die Anzahl der Zeilen das Produkt aus der Anzahl der betrachteten Zeiten, einer Anzahl der betrachteten Punkte und der Anzahl der Beobachtungsgrößen pro Punkt ist, und
die Anzahl der Spalten die Anzahl an Experimenten ist und
an der Stelle ij der wert $x_{ij}$ einer der Beobachtungsgrößen in einem Punkt zu einer Zeit in einem Experiment j, verschoben um den Mittelwert dieser Werte über mehrere oder alle Experimente, eingetragen sind, oder in der Zeilen und Spalten der Ereignismatrix bei entsprechend angepassten Formeln vertauscht eingetragen sind,
- aus jeder dieser Ereignismatrizen jeweils eine quadratische Matrix $X_1^T X_1$, ..., $X_n^T X_n$ bestimmt wird,
- für zumindest eine zu betrachtende Teilenge $A_i$ mit $1 \leq i \leq n$ eine Differenzmatrix

$$M_{diff} = X_i^T X_i - \lambda_{k_1} X_{k_1}^T X_{k_1} - ... - \lambda_{k_m} X_{k_m}^T X_{k_m}$$ mit $k_j \in \{1,...,i\text{-}1,i\text{+}1,...,n\}$, $k_m \neq k_n$ für $m \neq n$ und $\lambda_{k} > 1$ für alle $k_j$ bestimmt wird,

- die Eigenwerte von $M_{diff}$ und von $X_i^T X_i$ bestimmt werden,
- und die Anzahl von großen Eigenwerten, als welche Eigenwerte bezeichnet werden, deren Wert größer als eine vorgegebene Schwelle ist, für $X_i^T X_i$ und das entsprechende $M_{diff}$ bestimmt wird, wobei bestimmt wird,
- dass die Streuung der Werte der Beobachtungsgröße in der Teilmenge $A_i$ keine mit einer Streuung in einer der Teilmengen $A_{k_j}$, $k_j \in \{1,...,i\text{-}1,i\text{+}1,...,n\}$ gemeinsame Ursache hat, wenn die Zahl großer Eigenwerte von $M_{diff}$ gleich jener von $X_i^T X_i$ ist,
- dass die Streuung der Werte der Beobachtungsgröße in der Teilmenge $A_i$ eine Anzahl an Ursachen hat, die auch Ursache der entsprechenden Streuung in zumindest einer der Teilmengen $A_{k_j}$, $k_j \in \{1,...,i\text{-}1,i\text{+}1,...,n\}$ sind, wenn die zahl großer Eigenwerte von $M_{diff}$ kleiner als die zahl großer Eigenwerte von $X_i^T X_i$ ist, wobei vorzugsweise als eine Anzahl der mit zumindest einer der anderen Teilmengen gemeinsamen Ursachen die Differenz der Anzahl großer Eigenwerte von $M_{diff}$ und $X_i^T X_i$ bestimmt wird,
- dass alle Ursachen der Streuung in der Teilmenge $A_i$ auch Ursachen der Streuung in zumindest einer der Teilmengen $A_{k_j}$, $k_j \in \{1,...,i\text{-}1,i\text{+}1,...,n\}$ sind wenn $M_{diff}$ keine großen Eigenwerte hat.

2. Verfahren nach dem vorhergehenden Anspruch, **dadurch gekennzeichnet, dass** die Bestimmung, ob die jeweiligen Streuungen in den Teilmengen für mehrere oder alle der Teilmengen zumindest eine gemeinsame Ursache haben zumindest zweimal unter Verwendung zumindest eines unterschiedlichen Wertes der $\lambda_{k_j}$ durchgeführt wird, wobei

vorzugsweise nur jene in den zumindest zwei Bestimmungen bestimmten gemeinsamen Ursachen als tatsächliche gemeinsame Ursachen bestimmt werden, die für die Mehrzahl oder alle für $\lambda_{k_j}$ verwendeten Werte als gemeinsame Ursachen bestimmt werden, wobei besonders bevorzugt die $\lambda_{k_j}$ einen großen Bereich abdecken und für einen zusammenhängenden Teilbereich der $\lambda_{k_j}$ jeweils eine gemeinsame Ursache erkannt wird.

3. Verfahren nach dem vorhergehenden Anspruch, **dadurch gekennzeichnet, dass** die Punkte des Objektes gegenüber dem Material des Objektes fixiert sind und/oder Gitterpunkte eines das Objekt beschreibenden Gitters sind und/oder dass die Werte der Beobachtungsgrößen abhängig vom Ort und/oder der Gitterposition und/oder der Zeit sind.

4. Verfahren nach einem der vorhergehenden Ansprüche, **dadurch gekennzeichnet, dass** die Beobachtungsgröße eine oder mehrere Größen ausgewählt aus Ort des Punktes, Zeit der Messung, Blechdicke, Temperatur, Materialstärke, Schädigung, Kraftvektor und/oder Geschwindigkeit an den Punkten ist.

5. Verfahren nach einem der vorhergehenden Ansprüche,
**dadurch gekennzeichnet, dass** die statistischen Streuungen der Werte zumindest teilweise zumindest zwei Ursachen haben.

6. Verfahren nach einem der vorhergehenden Ansprüche,
**dadurch gekennzeichnet, dass** die Mehrzahl der Werte unter zumindest einer gleichen Randbedingung der Messung und/oder der Simulation, vorzugsweise unter vollständig gleichen kontrollierbaren Randbedingungen gewonnen werden und/oder unter Verwendung von für die einzelnen Experimente und/oder Simulationen unterschiedlichen Sätzen von Entwurfsparametern des Objektes gewonnen werden und dann bevorzugt durch Korrelotion zwischen den Entwurfsparametern und/oder den Randbedingungen einerseits und den Elementen jedes Eigenvektors andererseits Abhängigkeiten zwischen Veränderungen der Entwurfsparamter bzw. Randbedingungen und Veränderungen der Lösung festgestellt werden.

7. Verfahren nach einem der vorhergehenden Ansprüche,
**dadurch gekennzeichnet, dass** zumindest eine der Ursachen eine Streuung eines Messergebnisses an zumindest einem Ort zu zumindest einer zeit ist.

8. Verfahren nach einem der vorhergehenden Ansprüche, **dadurch gekennzeichnet, dass** die Teilmengen, bestimmt werden, indem für jede Teilmenge ausgehend von den Streuungen der Werte der ausgewählten Beobachtungsgrößen eines geeigneten Punktes in Raum und zeit als Streuungsmuster weitere Punkte hinzugefügt werden, deren Streuung mit dem aktuellen Streuungsmuster hinreichend stark korreliert, wobei das Streuungsmuster bei jeder Ergänzung überprüft und bei Bedarf angepasst wird.

9. Verfahren nach einem der vorhergehenden Ansprüche,
dadurch gekenntzeichnet, dass die Teilmengen, bestimmt werden, indem von Werten zumindest einer Beobachtungsgröße an zumindest einem Punkt des Objektes oder einer Gitterposition einerseits und einer Zeit andererseits ausgegangen wird, Punkte des Objektes definiert werden, an denen die Werte der zumindest einen Beobachtungsgröße zu bestimmten Zeiten während des Verlaufs der Messung und/oder der Simulation ermittelt werden,
die Streuung der Werte der zumindest einen Beobachtungsgröße an den Punkten des Objektes zu den bestimmten Zeiten über zumindest einige der Messungen und/oder Simulationen ermittelt wird, ermittelt wird, an welchen der Punkte die Streuungen der Werte korrelieren und
Ortsbereiche als die Teilmengen so gewählt werden, dass die Streuung der Beobachtungsgröße in den Ortsbereichen jeweils eine Korrelation aufweisen.

10. Verfahren nach einem der vorhergehenden Ansprüche,
**dadurch gekennzeichnet, dass** die festgestellten Werte Werte zumindest einer Beobachtungsgröße einer Messung und/oder einer Simulation eines Deformationsvorganges eines aus Bauteilen zusammengesetzten Körpers sind, wobei jeweils die Punkte eines der Bauteile für alle Bauteile als eine der Teilmengen $A_1, ..., A_n$ gesetzt werden, wobei die Punkte zumindest eines der Bauteile zu einer Zeit als Teilmenge $A_i$ gesetzt werden, dann zu diesem Bauteil räumlich benachbarte und zeitlich unmittelbar davor liegende Bauteile als weitere Teilmengen $A_{k_j}, k_j \in \{1,...,i-1,i+1,...,n\}$ gesetzt werden,
dann für die $A_{k_j}, k_j \in \{1,...,i-1,i+1,...,n\}$ bestimmt wird, welche der $A_{k_j}, k_j \in \{1,...,i-1,i+1,...,n\}$ mit $A_i$ eine gemeinsame Ursache haben,
dann zumindest einige der $A_{k_j}, k_j \in \{1,...,i-1,i+1,...,n\}$ welche mit $A_i$ eine gemeinsame Ursache haben, jeweils als Auf gesetzt werden, und

das Verfahren mit zu diesen $A_i$ benachbarten Bauteilen als $A_{k_j}$, $k_j \in \{1,...,i\text{-}1,i+1,...,n\}$, erneut durchgeführt wird, so lange, bis jeweils ein Bauteil als Ausgangspunkt der Streuung ermittelt wird, in dem die Streuung mit keinem weiteren benachbarten Bauteil zu einem benachbarten Zeitpunkt eine gemeinsame Ursache hat, wobei vorzugsweise in den so ermittelten Bauteilen die Punkte mit der stärksten Streuung der Werte als Ausgangspunkt der Streuung bestimmt werden.

11. Verfahren nach dem vorhergehenden Anspruch, **dadurch gekennzeichnet, dass**, wenn bei Durchführung des Verfahrens einige der $A_{k_j}$, welche mit dem entsprechenden $A_i$, eine gemeinsame Ursache haben, nicht als $A_i$ gesetzt wurden, das Verfahren erneut durchgeführt wird, wobei diese $A_i$, die im jeweils vorigen Durchlauf nicht als $A_i$ gesetzt wurden, nun zumindest zum Teil als $A_i$ gesetzt werden, wobei das verfahren vorzugsweise solange wiederholt wird, bis keine weitere usache für die Streuung gefunden werden kann.

12. Verfahren zur Bestimmung von Ursachen von Streuungen von Werten zumindest einer Beobachtungsgröße in verschiedenen Teilmengen von Punkten eines realen Objektes oder eines Modells eines realen Objektes in einer Simulation, wobei die Ursachen der Streuungen in zumindest einer ersten Teilmenge der Mess- und/oder Simulationsergebnisse bestimmt werden, indem in einem Verfahren nach einem der vorhergehenden Ansprüche bestimmt wird, welche zu der ersten Teilmenge räumlich benachbarte und zeitlich unmittelbar vorhergehende Teilmengen mit der ersten Teilmenge gemeinsame Ursachen haben, für die hierbei ermittelten Teilmengen wiederum räumlich benachbarte und zeitlich unmittelbar vorhergehende Teilmengen in einem Verfahren nach einem der vorhergehenden Ansprüche bestimmt werden, die mit den ermittelten Teilmengen gemeinsame Ursachen haben und die Ermittlung von räumlich und zeitlich benachbarten Teilmengen mit gleichen Ursachen für die jeweils zuletzt ermittelten Teilmengen so lange durchgeführt wird, bis keine weitere benachbarte Teilmenge mit gleicher Ursache ermittelbar ist, und jene Teilmengen, zu denen keine weitere Teilmenge mit gleicher Ursache benachbart ist, als jene Teilmengen erkannt werden, deren Streuung der Ergebnisse Ursache der Streuung der Ergebnisse in der ersten Teilmenge ist.

13. Verfahren zur Bestimmung von Ausbreitungswegen von Streuungen von Werten von Beobachtungsgrößen in Messungen und/oder Simulationen wobei gemeinsame Ursachen einer Streuung in einem verfahren nach Anspruch 11 bestimmt werden und jene Bauteile oder Teilmengen, die im Laufe des verfahrens als $A_i$ gesetzt werden, als Ausbreitungsweg bestimmt werden.

**Claims**

1. Method for computer-aided determination as to whether distributions of values of at least one observation variable in different subsets $A_r$ of points of a real object or of a model of a real object in a simulation have mutual causes, wherein

    - the at least one observation variable is a material property or physical property of the object or of the model,
    - a cause for a distribution lies in the geometric ratios and/or the material properties of the object
    - the values are results of experiments in the form of simulations and/or measurements of the at least one observation variable at a plurality of points of the object at certain times, and wherein
    - the subsets of the points of the object are determined in such a way that the distributions of the values of the at least one observation variable have a respective correlation in the subsets,

    and in the method

    - for at least some of the subsets $A_1$, ... ,An where n≥2, it is determined whether the respective distributions in these subsets have at least one mutual cause for several or all of these subsets by
    - an incidence matrix $X_r$ being determined for each of the subsets $A_r$, r=1, ... , n, in which

    the number of rows is the product of the number of considered times, a number of considered points and the number of observation variables per point, and
    the number of columns is the number of experiments and
    at the point ij, the value $x_{ij}$ of one of the observation variables is entered in a point at a time in an experiment j, displaced by the average value of these values over several or all experiments, or is entered interchangeably in the rows and columns of the incidence matrix in the case of correspondingly adapted formulae,

- from each of these incidence matrices, a quadratic matrix $X^T_1X_1$, ..., $X^T_nX_n$ is determined respectively,
- for at least one subset $A_i$ to be considered, where $1 \leq i \leq n$, a difference matrix $M_{diff} = X^T_1X_1 - \lambda_{k1}X^T_{k1}X_{k1} - ... - \lambda_{km}X^T_{km}X_{km}$ where $k_j \in \{1...,i-1, i+1,...,n\}$, $k_m \neq k_n$ for $m \neq n$ and $\lambda_{kj} > 1$ for all $k_j$ is determined,
- the eigenvalues of $M_{diff}$ and of $X^T_1X_1$ are determined,
- and the number of large eigenvalues, as which eigenvalues the value of which is greater than a predetermined threshold, are identified, is determined for $X^T_1X_1$ and the corresponding $M_{diff}$,

wherein it is determined

- that the distribution of values of the observation variable in the subset $A_i$ has no mutual cause with a distribution in one of the subsets $A_{kj}$, $k_j \in \{1 ..., i-1, i+1, ..., n\}$ if the number of large eigenvalues of $M_{diff}$ is the same as any of $X^T_1X_1$,
- that the distribution of the values of the observation variable in the subset $A_i$ has a number of causes which are also causes of the corresponding distribution in at least one of the subsets $A_{kj}$, $k_j \in \{1,...,i-1,i+1,...,n\}$, if the number of large eigenvalues of $M_{diff}$ is smaller than the number of large eigenvalues of $X^T_1X_1$, wherein the difference of the number of large eigenvalues of $M_{diff}$ and $X^T_1X_1$ is preferably determined as a number of the mutual causes with at least one of the other subsets,
- that all causes of the distribution in the subset $A_i$ are also causes of the distribution in at least one of the subsets $A_{kj}$, $k_j \in \{1,...,i-1,i+1,..., n\}$ if $M_{diff}$ has no large eigenvalues.

2. Method according to the preceding claim, **characterised in that** the determination as to whether the respective distributions in the subsets for several or all of the subsets have at least one mutual cause is carried out at least twice using at least one different value of $\lambda_{kj}$, wherein preferably only those mutual causes determined in the at least two determinations are determined as actual mutual causes which are determined as mutual causes for the majority or all values used for $\lambda_{kj}$, wherein, particularly preferably, the $\lambda_{kj}$ cover a large range and one respective mutual cause is recognised for a connected partial range of $\lambda_{kj}$.

3. Method according to the preceding claim, **characterised in that** the points of the object are fixed with respect to the material of the object and/or are grid points of a grid describing the object and/or the values of the observation variables are dependent on location and/or the grid position and/or the time.

4. Method according to one of the preceding claims, **characterised in that** the observation variable is one or several variables selected from location of the point, time of the measurement, sheet thickness, temperature, material thickness, damage, force vector and/or speed at the points.

5. Method according to one of the preceding claims, **characterised in that** the statistical distributions of the values at least partially have at least two causes.

6. Method according to one of the preceding claims, **characterised in that** the majority of the values are obtained under at least one identical boundary condition of the measurement and/or the simulation, preferably under completely identical controllable boundary conditions and/or are obtained using sets of design parameters of the object which differ for the individual experiments and/or simulations and then preferably, by correlation between the design parameters and/or the boundary conditions on the one hand and the elements of each eigenvector on the other hand, dependencies between changes of the design parameters or boundary conditions and changes of the solution are specified.

7. Method according to one of the preceding claims, **characterised in that** at least one of the causes is a distribution of a measurement result at at least one location at at least one time.

8. Method according to one of the preceding claims, **characterised in that** the subsets are determined by further points being added for each subset based on the distributions of the values of the selected observation variables of a suitable point in time and space as a distribution pattern, the distribution of said further points correlating sufficiently strongly with the current distribution pattern, wherein the distribution pattern is checked with each addition and adapted if necessary.

9. Method according to one of the preceding claims, **characterised in that** the subsets are determined based on values of at least one observation variable at at least one point of the object or a grid position on the one hand, and of a time on the other hand,

by points of the object being defined at which the values of the at least one observation variable are determined at certain times during the course of the measurement and/or the simulation,

by the distribution of the values of the at least one observation variable being determined at the points of the object at the certain times over at least some of the measurements and/or simulations, at which the distributions of the values correlate to the points and location ranges being selected as the subsets, such that the distribution of the observation variable has a respective correlation in the location ranges.

10. Method according to one of the preceding claims, **characterised in that** the specified values are values of at least one observation variable of a measurement and/or of a simulation of a deformation process of a body composed of components, wherein the respective points of one of the components are set for all components as one of the subsets $A_1$, ..., An, wherein the points of at least one of the components are set at a time as a subset $A_i$, then, for this component, spatially adjacent components which lie temporally directly before this are set as further subsets $A_{kj}$, $k_j \in \{1,...,i-1,i+1,...,n\}$,

then, for the $A_{kj}$, $k_j \in \{1,...,i-1,i+1,...,n\}$, it is determined which $A_{kj}$, $k_j \in \{1,i-1,i+1,n\}$ have a mutual cause with $A_i$,

then at least some of the $A_{kj}$, $k_j \in \{1,...,i-1,i+1,...,n\}$ which have a mutual cause with $A_i$, are set respectively as $A_i$, and the method is carried out again as $A_{kj}$, $k_j \in \{1,...,i-1,i+1,...,n\}$ with components adjacent to these $A_i$,

until a respective component is determined as a starting point of the distribution in which the distribution has a mutual cause with no further adjacent component at an adjacent point in time, wherein, in the thus determined components, the points are preferably determined with the strongest distribution of the values as a starting point of the distribution.

11. Method according to the preceding claim, **characterised in that** if, during implementation of the method, some of the $A_{kj}$, which have a mutual cause with the corresponding $A_i$, are not set as $A_i$, the method is carried out again, wherein these $A_i$ which were not set as $A_i$ in the respective previous pass are now set at least partially as $A_i$, wherein the method is preferably repeated until no further cause can be found for the distribution.

12. Method to determine causes of distributions of values of at least one observation variable in different subsets of points of a real object or of a model of a real object in a simulation, wherein the causes of the distributions in at least one first subset of the measurement and/or simulation results are determined by it being determined, in a method according to one of the preceding claims, which subsets that are spatially adjacent to and temporally directly preceding the first subset have mutual causes with the first subset, in turn spatially adjacent subsets which are temporally directly preceding and are determined in a method according to one of the preceding claims for the hereby determined subsets, said subsets having mutual causes with the determined subsets, and the determination of spatially and temporally adjacent subsets with identical causes for the respectively last determined subsets is implemented until no further adjacent subset with an identical cause is able to be detected and the subsets to which no further subset with the same cause is adjacent, are recognised as the subsets, the distribution of the results of which is the cause of the distribution of the results in the first subset.

13. Method for the determination of propagation paths of distributions of values of observation variables in measurements and/or simulations, wherein mutual causes of a distribution are determined in a method according to claim 11, and the components or subsets which are set in the course of the method as $A_i$ are determined as a propagation path.

**Revendications**

1. Procédé pour la détermination assistée par ordinateur si des dispersions de valeurs d'au moins une grandeur d'observation dans différentes quantités partielles $A_r$ de points d'un objet réel ou d'un modèle d'un objet réel dans une simulation ont des causes communes,

- l'au moins une grandeur d'observation étant une propriété de matériau ou une propriété physique de l'objet ou du modèle,
- une cause pour une dispersion se trouvant dans les rapports géométriques et/ou les propriétés du matériau de l'objet
- les valeurs étant des résultats d'expériences sous la forme de simulations et/ou de mesures de l'au moins une grandeur d'observation au niveau d'une pluralité de points de l'objet à des instants déterminés, et
- les quantités partielles des points de l'objet étant déterminées de façon à ce que, dans les quantités partielles, les dispersions de valeurs de l'au moins une grandeur d'observation présentent une corrélation,

et dans le procédé

- pour au moins certaines des quantités partielles $A_1$, ..., $A_n$, avec $n \geq 2$, il est déterminé si les dispersions correspondantes dans ces quantités partielles ont au moins une cause commune pour plusieurs ou pour toutes ces quantités partielles
- en déterminant, pour chacune des quantités partielles $A_r$, $r=1$, ..., n, une matrice d'événements $X_r$, dans laquelle

le nombre de lignes est le produit du nombre d'instants considérés, d'un nombre de points considérés et du nombre de grandeurs d'observation par point et

le nombre de colonnes correspond au nombre d'expériences et

à l'endroit ij, la valeur xij d'une des grandeurs d'observation au niveau d'un point à un instant dans une expérience j, est entrée de manière décalée de la valeur moyenne de ces valeurs sur plusieurs ou sur toutes les expériences, ou est entrée de manière intervertie dans les lignes et colonnes de la matrice d'événements pour des formules adaptées en conséquence,

- à partir de ces matrices d'événements, une matrice carrée $X^T_1 X_1$,...,$X^T_n X_n$ est déterminée,
- pour au moins une quantité partielle à considérer $A_i$, avec $1 \leq i \leq n$, une matrice différentielle $M_{diff} = X^T_i X_i - \lambda_{K1} X^T_{k1} X_{k1} - ... - \lambda_{km} X^T_{km} X_{km}$ avec $k_j \in \{1,...,i-1, i+1, ..., n\}$ pour m # n et $\lambda_{kj} > 1$ est déterminée pour tous les $k_j$,
- les valeurs propres de $M_{diff}$ et de $X^T_1 X_1$ sont déterminées,
- et le nombre de grandes valeurs propres, qui sont les valeurs propres désignées dont la valeur est supérieure à un seuil prédéterminé, est déterminé pour $X^T_i X_i$ et la $M_{diff}$ correspondante, moyennant quoi il est déterminé
  - que la dispersion des valeurs de la grandeur d'observation dans la quantité partielle $A_i$ n'a aucune cause commune avec une dispersion dans une des quantités partielles $A_{kj}$, $k_j \in \{1, ..., i-1, i+1, ..., n\}$, si le nombre de grandes valeurs propres de $M_{diff}$ est égal à celui de $X^T_i X_i$,
  - que la dispersion des valeurs de la grandeur d'observation dans la quantité partielle $A_i$ a un nombre de causes, qui sont également la cause de la dispersion correspondante dans au moins une des quantités partielles $A_{kj}$, $k_j \in \{1, ..., i-1, i+1, ..., n\}$, quand le nombre de grandes valeurs propres de $M_{diff}$ est inférieur au nombre de grandes valeurs propres de $X^T_i X_i$, de telle sorte que de préférence la différence entre les nombres de grandes valeurs propres de $M_{diff}$ et $X^T_i X_i$ est déterminée en tant que nombre de causes communes avec au moins une des autres quantités partielles,
  - que toutes les causes de dispersion dans la quantité partielle Ai sont également les causes de dispersion dans au moins une des quantités partielles $A_{kj}$, $k_j \in \{1,...,i-1, i+1,...,n\}$ si $M_{diff}$ n'a aucune grande valeur propre.

2. Procédé selon la revendication précédente, **caractérisé en ce que** la détermination si les dispersions correspondantes dans les quantités partielles pour plusieurs ou toutes les quantités partielles, ont au moins une cause commune, est effectuée au moins deux fois à l'aide d'au moins une valeur différente de $\lambda_{kj}$, de préférence seules les causes communes déterminées dans les au moins deux déterminations étant déterminées comme causes communes réelles, qui sont déterminées comme des causes communes pour la majorité ou pour toutes les valeurs utilisées pour $\lambda_{kj}$, plus particulièrement de préférence les $\lambda_{kj}$ couvrant une grande plage et, pour une zone partielle de $\lambda_{kj}$, une cause commune est détectée pour chaque zone partielle continue de $\lambda_{kj}$.

3. Procédé selon la revendication précédente, **caractérisé en ce que** les points de l'objet sont fixés par rapport au matériau de l'objet et/ou sont des points d'une grille descriptive de l'objet et/ou **en ce que** les valeurs des grandeurs d'observation sont dépendantes du lieu et/ou de la position de la grille et/ou du temps.

4. Procédé selon l'une des revendications précédentes, **caractérisé en ce que** la grandeur d'observation représente une ou plusieurs grandeurs sélectionnées parmi le lieu de l'objet, l'instant de la mesure, l'épaisseur de tôle, la température, l'épaisseur de matériau, l'endommagement, le vecteur de force et/ou la vitesse au niveau des points.

5. Procédé selon l'une des revendications précédentes, **caractérisé en ce que** les dispersions statistiques des valeurs ont au moins partiellement au moins deux causes.

6. Procédé selon l'une des revendications précédentes, **caractérisé en ce que** la majorité des valeurs sont obtenues sous au moins une condition de bord identique de mesure et/ou de simulation, de préférence sous des conditions de bord contrôlables entièrement identiques et/ou à l'aide d'ensembles de paramètres de conception de l'objet différents pour les différentes expériences et/ou simulations, puis, de préférence, par corrélation entre les paramètres de conception et/ou les conditions de bord d'une part et les éléments de chaque vecteur propre d'autre part, des dépendances entre les modifications des paramètres de conception ou les conditions de bord et les modifications de la solution sont établies.

**7.** Procédé selon l'une des revendications précédentes, **caractérisé en ce qu'**au moins une des causes est une dispersion d'un résultat de mesure au niveau d'un lieu à au moins un instant.

**8.** Procédé selon l'une des revendications précédentes, **caractérisé en ce que** les quantités partielles sont déterminées en ajoutant, pour chaque quantité partielle, à partir des dispersions des valeurs des grandeurs d'observation sélectionnées d'un point approprié dans l'espace et le temps, en tant que motif de dispersion, des points supplémentaires dont la dispersion est corrélée de manière suffisamment forte avec le motif de dispersion actuel, le motif de dispersion étant vérifié et, si nécessaire, adapté, à chaque ajout.

**9.** Procédé selon l'une des revendications précédentes, **caractérisé en ce que** les quantités partielles sont déterminées en partant de valeurs d'au moins une grandeur d'observation au niveau d'au moins un point de l'objet ou d'une position de grille d'une part et d'un instant d'autre part, des points de l'objet étant définis, au niveau desquels les valeurs de l'au moins une grandeur d'observation sont déterminées à des instants déterminés pendant le déroulement de la mesure et/ou de la simulation,

la dispersion des valeurs de l'au moins une grandeur d'observation est déterminée par l'intermédiaire d'au moins certaines des mesures et/ou des simulations au niveau des points de l'objet aux instants déterminés, au niveau desquels la dispersion des valeurs sont corréelées et

des zones locales sont choisies en tant que quantités partielles de façon à ce que la dispersion de la grandeur d'observation présente, dans les zones locales, une corrélation.

**10.** Procédé selon l'une des revendications précédentes, **caractérisé en ce que** les valeurs déterminées sont au moins une grandeur d'observation d'une mesure et/ou d'une simulation d'un processus de déformation d'un corps constitué de composants, les points d'un des composants étant définis, pour tous les composants, comme une des quantités partielles $A_1,...,A_n$, les points d'au moins un des composants à un instant sont définis comme quantité partielle $A_i$, puis des composants adjacents dans l'espace et situés temporellement immédiatement avant comme des quantités partielles supplémentaires $A_{kj}$, $k_j \in \{1, ..., i\text{-}1, i\text{+}1, ..., n\}$ sont définis, puis il est déterminé, pour $A_{kj}$, $k_j \in \{1, ..., i\text{-}1, i\text{+}1, ...,n\}$, lesquelles des $A_{kj}$, $k_j \in \{1, ..., i\text{-}1, i\text{+}1, ..., n\}$ ont une cause commune avec $A_i$, puis au moins certaines des $A_{kj}$, $k_j \in \{1, ..., i\text{-}1, i\text{+}1, ..., n\}$, qui ont une cause commune avec $A_i$, sont définies comme $A_i$ et

le procédé est effectué à nouveau avec ces composants adjacents à $A_i$ en tant que $A_{kj}$, $k_j \in \{1, ..., i\text{-}1, i\text{+}1, ...,n\}$,

Tant et si bien qu'à chaque fois ce qu'un composant est déterminé comme point de sortie de la dispersion, dans lequel la dispersion n'a une cause commune avec aucun composant adjacent à un instant adjacent, de préférence dans les composants ainsi déterminés, les points avec la dispersion la plus forte des valeurs étant déterminés comme point de sortie de la dispersion.

**11.** Procédé selon la revendication précédente, **caractérisé en ce que**, si lors de la réalisation du procédé, certaines des $A_{kj}$, qui ont une cause commune avec la $A_i$ correspondante, n'ont pas été définies comme $A_i$, le procédé est effectué à nouveau, ces $A_i$, qui n'ont respectivement pas été définies comme $A_i$ dans le procédé précédent, étant alors au moins partiellement définies comme $A_i$, le procédé étant répété de préférence jusqu'à ce qu'aucune cause supplémentaire ne soit trouvée pour la dispersion.

**12.** Procédé pour la détermination de causes de dispersion de valeurs d'au moins une grandeur d'observation dans différentes quantités partielles de points d'un objet réel ou d'un modèle d'un objet réel dans une simulation, les causes de dispersion étant déterminées dans au moins une première quantité partielle de résultats de mesure et/ou de simulation, en déterminant, dans un procédé selon l'une des revendications précédentes, lesquelles des quantités partielles de nouveau déterminées adjacentes dans l'espace et précédant immédiatement dans le temps la première quantité partielle ont des causes communes avec la première quantité partielle, pour les quantités partielles adjacentes dans l'espace et précédant immédiatement dans le temps les quantités partielles de nouveau déterminées qui ont des causes communes avec les quantités partielles déterminées étant déterminées dans un procédé selon l'une des revendications précédentes, et

la détermination des quantités partielles adjacentes dans l'espace et dans le temps avec les mêmes causes pour les quantités partielles déterminées en dernier est effectué jusqu'à ce qu'aucune quantité partielle adjacente supplémentaire avec la même cause puisse être déterminée et les quantités partielles, auxquelles aucune quantité partielle avec la même cause n'est adjacente, étant définies comme les quantités partielles dont la dispersion des résultats est la cause de la dispersion des résultats dans la première quantité partielle.

**13.** Procédé pour la détermination de trajets de propagation de dispersions de valeurs de grandeurs d'observation dans des mesures et/ou des simulations, des causes communes d'une dispersion étant déterminées dans un procédé selon la revendication 11 et les composants ou quantités partielles qui sont définis au cours du procédé comme $A_i$,

sont déterminés comme un trajet de propagation.

Fig. 1

Fig. 2

III

I

Platte zum Zeitpunkt 0

IV

II

Streuvektor 1:

Streuvektor 2:

Fig. 2 Fortsetzung:

Streuvektor 3:

Fig. 3

Fig. 4

**IN DER BESCHREIBUNG AUFGEFÜHRTE DOKUMENTE**

**In der Beschreibung aufgeführte Patentdokumente**

- DE 10207503 B3
- US 7386425 B

**In der Beschreibung aufgeführte Nicht-Patentliteratur**

- **ACKERMANN et al.** Principal Component Analysis for Detection of Globally Important Input Parameter in Nonlinear Finite Element Analysis. *Weimar, Optimization and Stochastic Days,* 20. November 2008